(19) Europäisches Patentamt
European Patent Office
Office européen des brevets

(11) **EP 3 577 595 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(21) Anmeldenummer: **18711814.6**

(22) Anmeldetag: **31.01.2018**

(51) Int Cl.:
*G06K 7/08* (2006.01)     *G06K 19/067* (2006.01)
*G06F 3/039* (2013.01)

(86) Internationale Anmeldenummer:
**PCT/EP2018/000045**

(87) Internationale Veröffentlichungsnummer:
**WO 2018/141479 (09.08.2018 Gazette 2018/32)**

(54) **VORRICHTUNG UND IHRE VERWENDUNG ZUR ERZEUGUNG EINES ZEITABHÄNGIGEN SIGNALS AUF EINEM KAPAZITIVEN FLÄCHENSENSOR, SOWIE EINE ELEKTRISCH LEITFÄHIGE STRUKTUR FÜR EINE SOLCHE VORRICHTUNG**

DEVICE AND ITS USE FOR THE GENERATION OF A TIME-DEPENDENT SIGNAL ON A CAPACITIVE SURFACE SENSOR, AND AN ELECTRICALLY CONDUCTIVE STRUCTURE FOR SUCH A DEVICE

DISPOSITIF ET SON UTILISATION DESTINÉ À PRODUIRE UN SIGNAL EN FONCTION DU TEMPS SUR UN CAPTEUR DE SURFACE CAPACITIF ET STRUCTURE ÉLECTROCONDUCTRICE POUR UN TEL DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2017 EP 17000165**

(43) Veröffentlichungstag der Anmeldung:
**11.12.2019 Patentblatt 2019/50**

(73) Patentinhaber: **Prismade Labs GmbH**
**09116 Chemnitz (DE)**

(72) Erfinder:
• **WEIGELT, Karin**
**09116 Chemnitz (DE)**
• **THIELE, Jan**
**09116 Chemnitz (DE)**

(74) Vertreter: **Hertin und Partner**
**Rechts- und Patentanwälte PartG mbB**
**Kurfürstendamm 54/55**
**10707 Berlin (DE)**

(56) Entgegenhaltungen:
EP-A1- 2 431 923     EP-A1- 2 458 526
EP-A2- 0 422 482     US-A1- 2014 332 587

**Beschreibung**

Die Erfindung betrifft eine Vorrichtung und ihre Verwendung zur Erzeugung eines zeitabhängigen Signals auf einem kapazitiven Flächensensor, sowie eine elektrisch leitfähige Struktur für eine solche Vorrichtung.

Die Erfindung ist auf dem technischen Gebiet der Autoidentifikationstechnologien angesiedelt. Bekannte Technologien zur automatischen gerätebasierten Identifikation von Objekten sind z.B. optische Codes oder RFID-Tags (Radiofrequenzidentifikation). Optische Codes sind in Form von klassischen Strichcodes (Barcodes) oder auch 2D-Barcodes bekannt. Der Nachteil von optischen Codes ist vor allem die einfache Kopierbarkeit, so dass entsprechende gekennzeichnete Objekte nicht optimal gegenüber Fälschungsversuchen geschützt sind.

RFID-Tags sind elektronische Schaltkreise, die mittels Funkwellen ausgelesen werden. Diese Tags sind wesentlich fälschungssicherer im Vergleich zu optischen Codes. Für viele Massenanwendungen sind RFID-Tags jedoch zu teuer, insbesondere weil häufig eine Anwendung in hohen Stückzahlen erforderlich ist.

Als weitere alternative Autoidentifikationstechnologie wurden in den letzten Jahren kapazitive Datenträger entwickelt, die die Vorteile der geringen Kosten und der verbesserten Fälschungssicherheit kombinieren. Aus dem Stand der Technik sind kapazitive Datenträger in unterschiedlichen Ausprägungen bekannt, sowie Verfahren zu deren Herstellung und Verfahren und Systeme zur Identifikation der Datenträger.

In WO 2011/154524 A1 wird ein System mit kapazitivem Informationsträger zur Erfassung von Informationen offenbart. Die Erfindung beschreibt ein System, umfassend einen kapazitiven Informationsträger, bei dem auf einem elektrisch nicht-leitfähigen Substrat eine elektrisch leitfähige Schicht angeordnet ist und einen Flächensensor, wobei der Informationsträger mit dem Flächensensor in Kontakt gebracht vorliegt. Die elektrisch leitfähige Schicht umfasst eine Touch-Struktur, die einen Touch-Punkt, eine. Koppelfläche und eine Leiterbahn umfasst. Eine solche Struktur kann mit einem mit dem Flächensensor verbundenen Datenverarbeitungssystem ausgewertet und softwaretechnisch verarbeitet werden. Die resultierenden Touch-Eingaben auf dem Flächensensor erzeugen ein statisches Bild von mehreren Touch-Punkten, welches vom Datenverarbeitungssystem ausgewertet werden kann.

In DE 10 2012 023 082 A1 ist die Interaktion eines flächigen, tragbaren Datenträgers mit einem Endgerät offenbart. Der tragbare Datenträger, der beispielsweise ein Wertdokument sein kann, umfasst eine elektrisch leitfähige Struktur, die auf zumindest einer Oberfläche und/oder im Inneren des Datenträgers vorgesehen ist, wobei einzelne Bereiche der leitfähigen Struktur elektrisch leitfähig oder kapazitiv miteinander verbunden sind. Das Endgerät weist eine berührungsempfindliche, kapazitive Fläche, insbesondere ein kapazitives Display, auf.

Die DE 10 2013 101 881 A1 beschreibt einen Mehrschichtkörper mit einem Träger und einer darauf angeordneten elektrisch leitfähigen Schicht, umfassend einen Informationsbereich und einen Hintergrundbereich, die voneinander galvanisch getrennt sind. In jedem Informationsbereich ist eine erste Zone mit elektrisch leitfähigem Material bereitgestellt, über deren Gesamtheit hinweg ihr elektrisch leitfähiges Material leitend verbunden ist. In jedem Hintergrundbereich ist eine Mehrzahl von zweiten Zonen mit elektrisch leitfähigem Material bereitgestellt, die galvanisch voneinander getrennt sind. Dieser Mehrschichtkörper kann mittels einer kapazitiv erfassenden Eingabevorrichtung ausgelesen werden.

Diese beiden Anmeldungen zeichnen sich dadurch aus, dass die elektrisch leitfähige Struktur, die den Informationsbereich darstellt, elektrisch leitfähig verbunden ist. Ausgewertet wird jeweils das statische Bild, welches die elektrisch leitfähige Struktur auf einem kapazitiven Endgerät erzeugt.

In US 20100045627 A1 ist ein Verfahren beschrieben, welches die Erzeugung eines Touch-Signals auf einem Berührungsbildschirm durch Form oder Muster eines Objektes sowie dessen Erkennung durch eine Software und das Auslösen einer zugeordneten Aktion beschreibt. Dabei erzeugt die Auflagefläche des gesamten Objekts ein Eingabesignal auf dem Berührungsbildschirm.

EP 2 458 526 A1 zeigt einen kartenförmigen Informationsträger mit dielektrischem oder leitfähigem Muster, der durch Überstreichen mit einem Berührungsschirm gelesen werden kann.

EP 0 422 482 A2 zeigt eine einer Fläche ausgebildete, maschinell lesbare Kodeanordnung, die aus einem Material besteht, das sich von der Umgebung durch die elektrische Leitfähigkeit unterscheidet.

Bei den genannten Objekten und Vorrichtungen aus dem Stand der Technik handelt es sich um Objekte oder Vorrichtungen, die entweder vollständig oder teilweise aus elektrisch leitfähigem Material bestehen und ein bestimmtes Eingabemuster auf einem kapazitiven Berührungsbildschirm verursachen. Dieses Eingabemuster, beziehungsweise der sogenannte "Fußabdruck", wird hinsichtlich der relativen Position der Kontaktflächen ausgewertet und einem Datensatz oder einer Aktion zugeordnet. Es wird dabei immer ein statisches Eingabemuster, welches zu einem bestimmten Zeitpunkt vorliegt, ausgewertet. Da bei den genannten Systemen immer ein statisches Eingabemuster ausgewertet wird, kann dieses auch imitiert werden. Damit ist bei den Systemen, die aus dem Stand der Technik bekannt sind, keine Fälschungssicherheit für sicherheitsrelevante Anwendungen gegeben.

Nachteilig bei den Vorrichtungen aus dem Stand der Technik ist, dass die begrenzte Datendichte, d.h. die Anzahl unterschiedlicher Identifikatoren (IDs) pro Fläche, durch die Art der Codierung begrenzt ist, wobei es sich üblicherweise um eine geometrische Codierung handelt. Eine größere Anzahl unterschiedlicher IDs resultiert in einem großen Flächenbedarf, der bei vielen Anwendungen nicht gewährleistet werden kann. Darüber hinaus ist die Benutzerfreundlichkeit für einige der genannten Systeme aus dem Stand der Technik nicht optimal, da der Nutzer darauf achten muss, welcher Teil des Datenträgers auf dem Berührungsbildschirm aufliegen muss und darf und welcher nicht aufliegen darf.

Weiterhin ist bei den Vorrichtungen aus dem Stand der Technik nachteilig, dass sich die Anwendung im Wesentlichen auf die reine Identifikation des Objektes beschränkt. Sowohl bei Barcodes, 2D-Barcodes, Funketiketten als auch bei kapazitiven Datenträgern; die aus dem Stand der Technik bekannt sind, ist lediglich eine Erkennung des Datenträgers möglich. Erweiterte Interaktionsmöglichkeiten des Nutzers mit dem Datenträger, z.B. die Erkennung von unterschiedlichen Bedienungsrichtungen, sind bisher nicht möglich.

Aufgabe der Erfindung ist es, Vorrichtungen und elektrische Strukturen für solche Vorrichtungen zur Erzeugung eines Eingabemusters auf einem kapazitiven Flächensensor bereitzustellen, die nicht die Mängel und Nachteile des Standes der Technik aufweist und darüber hinaus besonders fälschungssicher sind, die Unterbringung von großen Datenmengen auf geringen Raum ermöglichen und besonders benutzerfreundlich ausgebildet sind.

## Beschreibung der Erfindung:

Erfindungsgemäß ist zur Lösung der Aufgabe vorgesehen, eine Vorrichtung nach Anspruch 1, eine Verwendung nach Anspruch 10 und ein Verfahren nach Anspruch 12 bereitzustellen. Bevorzugte Ausführungsformen sind Gegenstand der abhängigen Ansprüche.

Es kann im Sinne der Erfindung insbesondere bevorzugt sein, dass die Vorrichtung eine elektrisch leitfähige Struktur umfasst und mit dem kapazitiven Flächensensor mindestens teilweise in einem ersten Wirkkontakt steht, wobei die Erzeugung des zeitabhängigen Signals auf dem kapazitiven Flächensensor durch Modulation einer dynamischen Eingabe durch die Vorrichtung erfolgt.

Es ist im Sinne der Erfindung bevorzugt, dass ein zeitabhängiges Signal bevorzugt ein zeitlich veränderliches Signal darstellt, d.h. ein Signal, das sich im Laufe der Zeit von sich selbst oder durch eine Einwirkung von außen verändert. Im Kontext der vorliegenden Erfindung wird das zeitabhängige Signals durch Modulation einer dynamischen Eingabe durch die Vorrichtung erzeugt, was im Sinne der Erfindung besonders bevorzugt bedeutet, dass das zeitabhängige Signal beispielsweise durch eine Bewegung, also einen dynamischen Vorgang, eines Eingabemittels auf einer elektrisch leitfähigen Struktur, die auf einer erfindungsgemäßen Vorrichtung angeordnet vorliegt, erzeugt wird.

Der Begriff "kapazitiver Flächensensor" bezeichnet im Sinne der Erfindung bevorzugt Vorrichtungen mit einem Touchscreen, die in der Lage sind, äußere Einwirkungen oder Beeinflussungen, beispielsweise Kontakte, der Touchscreenfläche wahrzunehmen und mittels angegliederter Logik auszuwerten. Solche Flächensensoren werden beispielsweise benutzt, um Maschinen einfacher zu bedienen. Um eine Eingabe an einem kapazitiven Bildschirm, der auch als Berührungsbildschirm, Touchscreen oder Flächensensor bezeichnet wird, vorzunehmen, können neben den Fingern auch spezielle Eingabestifte oder ähnliche Vorrichtungen genutzt werden, die im Sinne der Erfindung bevorzugt als Eingabemittel bezeichnet werden. Diese sind vorzugsweise in der Lage, eine kapazitive Kopplung zwischen Zeilen- und Spaltenelektroden innerhalb des Flächensensors zu ändern. Der kapazitive, bevorzugt berührungsempfindliche Bildschirm ist vorzugsweise dafür eingerichtet, die Position des Eingabemittels zu detektieren.

Üblicherweise werden Flächensensoren in einem elektrischen Gerät bereitgestellt, wobei es sich um Smartphones, Handys, Displays, Tablet-PCs, Tablet-Notebooks, Touchpad-Geräte, Grafiktabletts, Fernseher, PDAs, MP3-Player, Trackpads und/ oder kapazitive Eingabegeräte handeln kann, ohne darauf begrenzt zu sein. Touchscreens werden vorzugsweise auch als Tastschirme, Flächensensoren oder Sensorbildschirme bezeichnet. Ein Flächensensor muss sich nicht zwingend in Zusammenhang mit einem Display oder einem Touchscreen verwendet werden. Es kann im Sinne der Erfindung ebenso bevorzugt sein, dass der Flächensensor sichtbar oder nicht-sichtbar in Geräten, Objekten und/oder Vorrichtungen integriert vorliegt.

Es kann im Sinne der Erfindung beispielsweise bevorzugt sein, multitouchfähige Flächensensoren zu verwenden. Solche Flächensensoren sind vorzugsweise dafür eingerichtet, mehrere Berührungen gleichzeitig zu erkennen, wodurch zum Beispiel Elemente, die auf dem Flächensensor angezeigt werden, gedreht und/oder skaliert werden können.

Flächensensoren umfassen insbesondere mindestens einen aktiven Schaltkreis, der vorzugsweise als Touch-Controller bezeichnet wird, welcher mit einer Struktur von Elektroden verbunden sein kann. Es sind im Stand der Technik Flächensensoren bekannt, deren Elektroden Gruppen von Elektroden umfassen, die sich beispielsweise in ihrer Funktion voneinander unterscheiden. Dabei kann es sich zum Beispiel um Sende- und Empfangselektroden handeln, die in einer besonders bevorzugten Anordnung in Spalten- und Zeilenform angeordnet vorliegen können, d.h. insbesondere Knotenpunkte bilden, an denen sich mindestens je eine Sende- und eine Empfangselektrode miteinander überkreuzen oder überlappen. Vorzugsweise sind die sich überkreuzenden Sende- und Empfangselektroden im Bereich der Knotenpunkte so zueinander ausgerichtet, dass sie miteinander im Wesentlichen 90 °-Winkel einschließen. Es ist im Sinne der Erfindung insbesondere bevorzugt, dass sich zwischen den Sende- und Empfangselektroden des Flächensensors ein elektrostatisches Feld ausbildet, das empfindlich auf Veränderungen reagiert, wie zum Beispiel durch das Inkontaktbringen der Oberfläche eines Flächensensors mit einem elektrisch leitfähigen Objekt beziehungsweise durch dessen Erdung, d.h. einem Abfluss von elektrischer Ladung.

Es ist im Sinne der Erfindung bevorzugt, dass der Touch-Controller die Elektroden vorzugsweise so ansteuert, dass sich zwischen jeweils einer oder mehreren Sendeelektroden und einer oder mehreren Empfangselektroden ein elektrisches Feld ausbildet. Dieses elektrische Feld innerhalb des Flächensensors kann durch die Bereitstellung eines ersten Wirkkontakts zwischen dem Flächensensor und der Vorrichtung gemäß der vorliegenden Erfindung verändert werden, insbesondere durch eine dynamische Eingabe. In der Regel wird das elektrische Feld durch Berührung mit einem Finger oder einem elektrisch leitfähigen Objekt lokal verringert, d.h. "Ladungen werden abgezogen". Dies kann beispielsweise dadurch geschehen, dass eine Vorrichtung gemäß der vorliegenden Erfindung auf einem Flächensensor aufgelegt oder in Kontakt gebracht wird, wodurch vorzugsweise ein erster Wirkkontakt hergestellt wird, und auf der elektrisch leitfähigen Struktur der Vorrichtung mit einem Eingabemittel eine Bewegung ausgeführt wird, wodurch vorzugsweise ein zweiter Wirkkontakt hergestellt wird, so dass zu unterschiedlichen Zeiten unterschiedliche Bereiche der elektrisch leitfähigen Struktur vom Eingabemittel berührt werden. Bei der Bewegung kann es sich beispielsweise um eine Gleit-, Wisch-, Streich-, Zug- oder Schubbewegung handeln, ohne darauf beschränkt zu sein. Es kann im Sinne der Erfindung auch bevorzugt sein, wenn mindestens ein Bereich auf der Vorrichtung optisch markiert oder hervorgehoben ist, der für die Berührung und/oder Kontaktierung durch ein Eingabemittel eingerichtet ist.

Es ist im Sinne der Erfindung bevorzugt, dass die Vorrichtung und der Flächensensor ein System bilden, wobei mit der Vorrichtung ein bevorzugt zeitabhängiges Signal auf dem Flächensensor festgelegt werden kann. Es ist bevorzugt, dass es sich bei der Vorrichtung um eine erfindungsgemäße Vorrichtung handelt oder um eine Vorrichtung gemäß einer oder mehrerer der bevorzugten Ausführungsformen der Erfindung. Es ist ganz besonders bevorzugt, dass die Vorrichtung dazu eingerichtet ist, ein zeitabhängiges Signal auf dem kapazitiven Flächensensor festzulegen, wobei eine elektrisch leitfähige Struktur der Vorrichtung mit dem kapazitiven Flächensensor mindestens teilweise in einem ersten Wirkkontakt steht und das zeitabhängige Signal in Abhängigkeit von der Ausgestaltung der elektrisch leitfähigen Struktur festgelegt wird.

Insbesondere umfasst die Vorrichtung, die zusammen mit dem Flächensensor ein System bildet, eine elektrisch leitfähige Struktur umfassend mindestens zwei Einzelelemente, wobei die Einzelelemente jeweils mindestens einen Wirkbereich und einen Eingabebereich umfassen. Der Eingabe- und der Wirkbereich werden bevorzugt als funktionale Bereiche bezeichnet, wobei diese funktionalen Bereiche der Einzelelemente vorzugsweise galvanisch miteinander verbunden vorliegen. Es ist ferner bevorzugt, dass die Einzelelemente der elektrisch leitfähigen Struktur galvanisch getrennt voneinander vorliegen.

Das zeitabhängige Signal wird vorzugsweise durch das synergistische Zusammenwirken zwischen Vorrichtung und Flächensensor erzeugt, insbesondere unter Einbeziehung eines Eingabemittels. Anders als im Stand der Technik, der offenbart, dass eine Relativbewegung zwischen Vorrichtung und einer Lesevorrichtung erfolgt, besteht zwischen der Vorrichtung und dem Flächensensor gemäß der vorliegenden Erfindung bevorzugt ein stationär ausgebildeter erster Wirkkontakt, bei dem gerade keine Relativbewegung zwischen der Vorrichtung und dem Flächensensor erfolgt. Stattdessen erfolgt im Kontext der vorliegenden Erfindung ein vorzugsweise dynamisch ausgebildeter zweiter Wirkkontakt zwischen Vorrichtung und einem Eingabemittel, wobei das Eingabemittel beispielsweise mit einer Gleit-, Wisch-, Streich-, Zug- oder Schubbewegung über die Vorrichtung bewegt werden kann. Die vorliegende Erfindung wendet sich damit gerade vom Stand der Technik ab, bei der eine Vorrichtung, beispielsweise eine bedruckbare Karte, durch ein Lesegerät gezogen werden muss oder eine Relativbewegung zwischen Karte und Lesegerät auf andere Weise bewirkt werden muss.

Der Begriff des Inkontaktbringens beziehungsweise des Kontakts umfasst im Sinne der Erfindung vorzugsweise, dass sich die beiden Gegenstände, die in Kontakt miteinander vorliegen, berühren, wobei sich die beiden Gegenstände relativ zueinander bewegen können. Ein Wirkkontakt umfasst vorzugsweise einen stationär oder dynamisch ausgebildeten Kontakt, wobei der Wirkkontakt zwischen zwei Gegenständen oder Objekten darüber hinaus eine Wechselwirkung zwischen den Gegenständen oder Objekten voraussetzt. Im Sinne der Erfindung stellt die Wechselwirkung eine kapazitive Kopplung oder kapazitive Wechselwirkung dar. Im Sinne der Erfindung kann ein Wirkkontakt somit vorzugsweise stationär oder dynamisch ausgebildet sein. Ein stationärer Wirkkontakt kann beispielsweise durch ein Auflegen einer Vorrichtung auf einen Flächensensor erreicht werden, während ein dynamischer Wirkkontakt vorzugsweise dadurch erreicht werden kann, dass beispielsweise ein Eingabemittel auf einer Vorrichtung, zum Beispiel einer Verpackung, bewegt wird, d.h. sich die Vorrichtung und das Eingabemittel relativ zueinander bewegen.

Dieser Bereich der elektrisch leitfähigen Struktur, der vorzugsweise dazu eingerichtet ist, berührt zu werden, wird im Sinne der Erfindung bevorzugt als "Eingabebereich" bezeichnet. Es ist im Sinne der Erfindung bevorzugt, dass die Eingabebereiche mit anderen Bereichen der elektrisch leitfähigen Struktur verbunden vorliegen, die im Sinne der Erfindung als Wirkbereich bezeichnet werden. Eingabe- und Wirkbereich unterscheiden sich vorzugsweise durch ihre Funktionalitäten, wobei die Wirkbereiche vorzugsweise dazu eingerichtet sind, einzeln oder in ihrer Gesamtheit von einem Flächensensor erkannt und/oder detektiert zu werden. Die Eingabe- und Wirkbereiche unterscheiden sich auch durch ihre Verwendung. Es ist insbesondere bevorzugt, dass die Eingabebereiche der Einzelelemente der elektrisch leitfähigen Struktur nicht in Wirkkontakt mit dem Flächensensor stehen, während die Wirkbereiche vorzugsweise mit dem Flächensensor in einem stationären ersten Wirkkontakt stehen.

Durch das synergistische Zusammenwirken der Eingabebereiche mit den Wirkbereichen der elektrisch leitfähigen Struktur auf der Vorrichtung wird vorzugsweise die Modulation der dynamischen Eingabe ermöglicht, d.h. die dynamische Eingabe, die im Eingabebereich der elektrisch leitfähigen Struktur erfolgt, wird insbesondere durch die Ausgestaltung des Wirkbereichs der elektrisch leitfähigen Struktur so umgewandelt beziehungsweise moduliert, dass der Flächensensor ein zeitabhängiges Signal erkennt, dass von der Form der dynamischen Eingabe abweichen kann. Diese Veränderung einer dynamischen Eingabe in ein zeitabhängiges Signal wird im Sinne der Erfindung bevorzugt als Modulation einer dynamischen Eingabe bezeichnet.

Es ist im Sinne der Erfindung bevorzugt, dass je ein Wirkbereich-mit einem entsprechenden Eingabebereich galvanisch und/oder elektrisch leitend verbunden vorliegt, wobei es ferner bevorzugt ist, dass eine elektrisch leitfähige Struktur der Vorrichtung mehrere Paare von Eingabe- und Wirkbereichen umfassen kann. Durch die galvanische und/oder elektrisch leitende Verbindung der Wirkbereiche mit den Eingabebereichen werden die so miteinander verbundenen Bereiche der elektrisch leitfähigen Struktur im Wesentlichen auf ein ähnliches elektrisches Potential gesetzt, wodurch die Wirkbereiche, obwohl sie nicht selbst vom Eingabemittel berührt werden, für den Flächensensor sichtbar werden. Diese Sichtbarmachung wird im Sinne der Erfindung bevorzugt auch als Aktivierung der Wirkbereiche der elektrisch leitfähigen Struktur bezeichnet. Die Berührung der Eingabebereiche im Wege einer dynamischen Eingabe und die Erkennung eines zeitabhängigen Signals, das im Wesentlichen von der Ausgestaltung der Wirkbereiche abhängig ist und sich vorzugsweise von der dynamischen Eingabe unterscheidet, stellt ein wesentliches Merkmal der Erfindung dar. Es ist bevorzugt, dass die Wirkbereiche vorzugsweise räumlich von den Eingabebereichen getrennt vorliegen, wobei die Wirkbereiche vorzugsweise dadurch aktiviert werden, dass die entsprechenden Eingabebereiche von einem Eingabemittel berührt werden. Dadurch verändert sich vorzugsweise das elektrische Potential der Eingabebereiche, wobei diese Potentialveränderung vorteilhafterweise durch die galvanische und/oder elektrisch leitende Verbindung der Wirkbereiche mit den Eingabebereichen zu den Wirkbereichen übertragen wird. Somit werden auch die Wirkbereiche für den Flächensensor sichtbar, wobei der Flächensensor vorzugsweise dazu eingerichtet ist, Änderungen des elektrischen Potentials zu erkennen.

Die Elemente der elektrisch leitfähigen Struktur, die zu einem Zeitpunkt x von dem Eingabemittel berührt werden, ergeben eine Momentaufnahme $A_x$, die der Flächensensor zu diesem Zeitpunkt $x$ "sieht" und die sich von einer Momentaufnahme $A_y$, die der Flächensensor zum Zeitpunkt $y$ "sieht", unterscheiden kann. Die Menge aller Momentaufnahmen $A_i$, die der Flächensensor über einen Zeitraum $T$ "sieht", stellt das zeitabhängige Signal im Sinne der vorliegenden Erfindung dar. Die Zeitabhängigkeit des Signals, d.h. die Veränderlichkeit des Signals mit der Zeit, ergibt sich vorteilhafterweise daraus, dass die einzelnen Momentaufnahmen $A_i$ unterschiedlich sein können, wenn zu unterschiedlichen Zeiten unterschiedliche Elemente der elektrisch leitfähigen Struktur der erfindungsgemäßen Vorrichtung mit dem Eingabemittel berührt werden. Die Abfolge der Positionen des Eingabemittels zu den unterschiedlichen Zeiten $i$ stellt bevorzugt die Bewegung auf der Vorrichtung dar, mit der die dynamische Eingabe erzeugt wird. Es ist im Sinne der Erfindung bevorzugt, dass das zeitabhängige Signal durch die Abfolge der Detektion der Momentaufnahmen $A_x$ in Abhängigkeit von der Ausgestaltung der elektrisch leitfähigen Struktur auf der Vorrichtung, insbesondere der Wirkbereiche, festgelegt wird. Es ist insbesondere bevorzugt, dass das zeitabhängige Signal vom Flächensensor detektiert wird.

Bei der dynamischen Eingabe handelt es sich somit im Sinne der Erfindung bevorzugt um die Bewegung des Eingabemittels auf der elektrisch leitfähigen Struktur der erfindungsgemäßen Vorrichtung. Diese dynamische Eingabe wird im Sinne der Erfindung bevorzugt als zweiter Wirkkontakt bezeichnet, wobei der zweite Wirkkontakt bevorzugt dynamisch ausgebildet ist. Dabei werden vorzugsweise durch diese Bewegung unterschiedliche Bereiche der elektrisch leitfähigen Struktur in dem Sinne aktiviert, dass sie für den Flächensensor "sichtbar" werden. Dieses Sichtbarwerden beruht auf einer Kopplung zwischen dem kapazitiven Flächensensor und einem leitfähigen Körper, wenn beispielsweise eine Erdung des leitfähigen Körpers vorliegt, die zu einer Änderung des elektrostatischen Feldes zwischen den Elektroden in einem Flächensensor und/oder zu einer messbaren Änderung der Kapazität führen kann. Die Änderung des elektrostatischen Feldes kann beispielsweise durch ein Inkontaktbringen des Flächensensors mit einem Eingabemittel erfolgen. In diesem Kontext bewirkt das Inkontaktbringen des Eingabemittels bevorzugt, dass das Signal zwischen den Elektroden verändert wird. In der Regel wird das Signal vermindert, weil das Eingabemittel einen Teil des Signals von der Sendeelektrode aufnimmt und so ein geringeres Signal an der Empfangselektrode ankommt.

Die Änderung des elektrostatischen Feldes kann in einer besonders bevorzugten Ausführungsform der Erfindung dadurch erfolgen, dass ein erster Wirkkontakt zwischen einer erfindungsgemäßen Vorrichtung und einem Flächensensor hergestellt wird. Darüber hinaus kann ein zweiter Wirkkontakt zwischen einem Eingabemittel und der Vorrichtung hergestellt werden. Mit anderen Worten kann es bevorzugt sein, dass eine erfindungsgemäße Vorrichtung zwischen Eingabemittel und Flächensensor angeordnet vorliegt, wobei die Vorrichtung mit dem Flächensensor einen ersten und mit dem Eingabemittel einen zweiten Wirkkontakt bildet. Dabei ist es insbesondere bevorzugt, dass es sich bei der Vorrichtung um ein dreidimensionales Objekt handelt, beispielsweise eine Verpackung, die zum Beispiel quaderförmig ausgestaltet sein kann, wobei der erste Wirkkontakt dadurch entstehen kann, dass die Vorrichtung, beispielsweise die Verpackung, auf einen Flächensensor aufgelegt wird, während der zweite Wirkkontakt dadurch hergestellt wird, dass ein Kontakt zwischen Eingabemittel und Vorrichtung hergestellt wird, wobei es sich um einen dynamischen Kontakt handelt in dem Sinne, dass im Sinne der Erfindung der Kontakt in Form einer Bewegung erfolgt, beispielsweise indem mit dem Eingabemittel über die Vorrichtung gefahren, gewischt, gestrichen oder gestreichelt wird, ohne darauf beschränkt zu sein.

Es ist demnach insbesondere bevorzugt, wenn die zwei Wirkkontakte zur Erzeugung des zeitabhängigen Signals an den Seitenflächen der Vorrichtung, beispielsweise des dreidimensionalen Objekts, entstehen. Es kann im Falle einer quaderförmigen Verpackung beispielsweise bevorzugt sein, dass der erste Wirkkontakt zwischen Vorrichtung und Flächensensor an einer Unterseite der Verpackung gebildet wird, die vorzugsweise auf dem Flächensensor aufliegt, während der zweite Wirkkontakt zwischen Vorrichtung und Eingabemittel an einer der Seitenwände der Vorrichtung entsteht. In diesem Ausführungsbeispiel ist es bevorzugt, dass ein Teil der elektrisch leitfähigen Struktur der Vorrichtung an der Seitenfläche angeordnet vorliegt, an der der zweite Wirkkontakt stattfindet, während ein anderer Teil der elektrisch leitfähigen Struktur an der Unterseite der Vorrichtung vorliegt, die den ersten Wirkkontakt mit dem Flächensensor bildet. Selbstverständlich kann der zweite Wirkkontakt auch auf einer Oberseite der Vorrichtung gebildet werden.

Es ist im Sinne der Erfindung besonders bevorzugt, dass der erste Wirkkontakt, der zwischen der Vorrichtung und dem Flächensensor vorliegt, stationär ausgebildet ist, während der zweite Wirkkontakt zwischen der Vorrichtung und dem Eingabemittel dynamisch ausgebildet ist. Das bedeutet im Sinne der Erfindung bevorzugt, dass die Vorrichtung bevorzugt auf einer Oberfläche des Flächensensors aufliegt, ohne bewegt zu werden, während das Eingabemittel auf der Vorrichtung bewegt wird beziehungsweise auf dieser, insbesondere auf deren elektrisch leitfähiger Struktur, eine Bewegung ausführt. Daraus ergibt sich, dass auch der Flächensensor und das Eingabemittel dynamisch miteinander in Beziehung stehen, d.h. sich relativ zueinander bewegen, obwohl sie bei erfindungsgemäßer Verwendung durch die Vorrichtung getrennt voneinander vorliegen und sich insbesondere nicht direkt berühren und/oder in direktem Kontakt miteinander stehen.

Die Bewegung des Eingabemittels auf der Vorrichtung, die vorzugsweise die dynamische Eingabe hervorruft, kann beispielsweise eine geradlinige Bewegung in der Form eines Strichs sein. Eine solche strichförmige Bewegung würde von einem Flächensensor, wenn sie direkt auf dem berührungsempfindlichen Display ausgeführt würde, als strichförmige Eingabe erkannt werden. Wenn jedoch die strichförmige Bewegung auf einer erfindungsgemäßen Vorrichtung, die eine elektrisch leitfähige Struktur aufweist, ausgeführt wird, so "sieht" der Flächensensor eine Momentaufnahme, die durch die räumliche Ausgestaltung der elektrisch leitfähigen Struktur der Vorrichtung verändert ist, d.h. in der Regel nicht mehr strichförmig sein wird, wenn nicht zufällig alle Elemente der elektrisch leitfähigen Struktur ausschließlich symmetrisch und/oder kongruent zueinander angeordnet vorliegen. Somit unterscheiden sich die eigentliche Bewegung des Eingabemittels und die Wahrnehmung des kapazitiven Flächensensors von dieser Bewegung, wobei die Umwandlung von der erfindungsgemäßen Vorrichtung durch die räumliche Anordnung der Bestandteile und/oder Elemente der elektrisch leitfähigen Struktur bewirkt wird und im Sinne der Erfindung bevorzugt als "Modulation" bezeichnet wird. Die Erzeugung des zeitabhängigen Signals auf dem kapazitiven Flächensensor erfolgt durch Modulation einer dynamischen Eingabe durch die Vorrichtung, wobei das zeitabhängige Signal von der Vorrichtung auf den kapazitiven Flächensensor übertragen werden kann. Diese Formulierung bedeutet im Sinne der Erfindung bevorzugt, dass das zeitabhängige Signal durch eine Bewegung eines Eingabemittels auf der Vorrichtung hervorgerufen wird, die als dynamische Eingabe von der räumlichen Anordnung einer elektrisch leitfähigen Struktur auf der Vorrichtung moduliert, d.h. insbesondere verändert wird, so dass auf dem Flächensensor ein zeitlich veränderliches Signal entsteht, dass sich aus Momentaufnahmen der aktivierten Bereiche der elektrisch leitfähigen Struktur zusammensetzt, die durch die kurzzeitige Berührung mit dem Eingabemittel für kurze Zeit aktiviert werden, wobei die Menge der Kurzzeit-Berührungen der Bewegung des Eingabemittels entspricht.

Da die elektrisch leitfähige Struktur sehr flexibel gestaltet werden kann und darüber hinaus durch die Vorgabe verschiedener Bewegungsmöglichkeiten auf der Vorrichtung eine sehr große Zahl verschiedener Bewegungen des Eingabemittels denkbar ist, ist es möglich, eine Vorrichtung bereitzustellen, die eine sehr hohe Datendichte aufweist. Es war vollkommen überraschend, dass die Vorrichtung mit einer elektrisch leitfähigen Struktur gemäß der vorliegenden Erfindung beispielsweise eine Datenkapazität von bevorzugt mindestens 8 bit, besonders bevorzugt mindestens 16 bit aufweisen kann. Es war völlig überraschend, dass diese Datenkapazität im Vergleich zu den Vorrichtungen im Stand der Technik bevorzugt auf einer kleinen Oberfläche realisiert werden kann, wodurch eine hohe Datendichte erreichbar wird. Die kleine Oberfläche wird dabei vorzugsweise von der Unterseite und/oder den Seitenflächen der Vorrichtung gebildet, auf denen die funktionalen Bereiche der elektrisch leitfähigen Struktur angeordnet vorliegen.

Darüber hinaus ist die Vorrichtung besonders nutzerfreundlich, da die Nutzung der Vorrichtung erfolgt, indem die Vorrichtung auf den Flächensensor aufgelegt wird. Es muss nicht mehr, wie bei konventionellen Datenträgern, darauf geachtet werden, dass bestimmte Bereiche der Vorrichtung nicht oder auf besonderen Bereichen des Flächensensors aufliegen.

Die Vorrichtung bietet zudem verschiedene Interaktionsmöglichkeiten. Die Bewegung des Eingabemittels auf der Vorrichtung kann beispielsweise in verschiedenen Richtungen erfolgen und im Ergebnis unterschiedliche Aktionen auf dem den kapazitiven Flächensensor beinhaltenden Gerät starten. Damit ergeben sich für eine elektrisch leitfähige Struktur bereits zwei Interaktionsrichtungen. Es war völlig überraschend, dass mit derselben Vorrichtung eine Vielzahl unterschiedlicher Aktionen ausgelöst werden können. Dies stellt einen signifikanten Vorteil gegenüber dem Stand der Technik dar. Sowohl bei Barcodes, 2D-Barcodes, Funketiketten als auch bei kapazitiven Datenträgern, die aus dem Stand der Technik bekannt sind, beschränkt sich die Anwendung im Wesentlichen auf die Identifikation des Objektes.

In einer bevorzugten Ausführungsform der Erfindung umfasst die elektrisch leitfähige Struktur mindestens zwei Einzelelemente, die als funktionale Bereiche jeweils einen Eingabebereich und einen Wirkbereich umfassen. Es ist im Sinne der Erfindung bevorzugt, dass der Eingabebereich ein Bereich der elektrisch leitfähigen Struktur ist, der bevorzugt mit dem Eingabemittel zusammenwirkt, beispielsweise zur Bildung des zweiten Wirkkontakts. Es kann beispielsweise bevorzugt sein, dass im Eingabebereich die Bewegung des Eingabemittels auf der Vorrichtung erfolgt, die der dynamischen Eingabe entspricht. Beispielweise kann der Eingabebereich ein streifenförmiger Bereich auf einer Außenfläche der erfindungsgemäßen Vorrichtung sein, der optisch oder haptisch hervorgehoben ist und auf dem eine Streich- oder Wischbewegung des Eingabemittels, beispielsweise eines Fingers, erfolgt. Eine haptische Hervorhebung kann beispielsweise durch das Aufbringen eines Lacks erreicht werden, der vorzugsweise stellenweise auf der elektrisch leitfähigen Struktur, insbesondere dem Eingabebereich, aufgebracht wird und dort die Stellen der elektrisch leitfähigen Struktur markiert, die mit dem Eingabemittel berührt werden sollen, um die dynamische Eingabe zu erzeugen. Tests haben gezeigt, dass ein Finger, der als Eingabemittel verwendet wird, besonders gut mit einer Lackmarkierung über den Eingabebereich der elektrisch leitfähigen Struktur geführt werden kann, indem er in einem Anfangsbereich auf den lackierten Bereich der elektrisch leitfähigen Struktur aufgesetzt wird und dann dem lackierten Bereich folgt. Dabei hat es sich als besonders vorteilhaft erwiesen, wenn der lackierte Bereich streifenförmig ausgebildet ist und eine bevorzugte Breite im Größenordnungsbereich eines menschlichen Fingers aufweist. Darüber hinaus kann die haptische Hervorhebung auch durch Druckweiterverarbeitungsverfahren, wie z.B. Rillen, Prägen und/oder Falten, erreicht werden, wodurch vorzugsweise dreidimensionale Führungslinien erzeugt werden, die dem Nutzer den Eingabebereich verdeutlichen.

Es ist im Sinne der Erfindung bevorzugt, dass die elektrisch leitfähige Struktur der Vorrichtung mindestens zwei Einzelelemente umfasst. Es kann aber für einige Anwendungen der Erfindung bevorzugt sein, dass die elektrisch leitfähige Struktur eine größere Zahl von Einzelelementen umfasst.

Der Wirkbereich des Einzelelements der elektrisch leitfähigen Struktur kann beispielsweise der Bereich der Vorrichtung sein, der den ersten Wirkkontakt zwischen Flächensensor und Vorrichtung bildet. Es ist in einer Ausführungsform der Erfindung bevorzugt, dass die beiden funktionalen Bereiche der elektrisch leitfähigen Struktur auf unterschiedlichen Außenflächen der Vorrichtung vorliegen, beispielsweise an einer Unterseite zur Bildung des ersten Wirkkontakts und auf einer Seitenfläche zur Bildung des zweiten Wirkkontakts. Es ist in dieser Ausführungsform demnach insbesondere bevorzugt, dass Eingabe- und Wirkbereich räumlich getrennt voneinander vorliegen.

Es kann im Sinne der Erfindung bevorzugt sein, dass die Einzelelemente, die die elektrisch leitfähige Struktur bilden, zueinander ähnlich sind, d.h. beispielsweise aus Streifen mit unterschiedlicher Länge und/oder Breite bestehen. Es kann aber auch bevorzugt sein, dass die Einzelelemente einer elektrisch leitfähigen Struktur untereinander nicht ähnlich sind, also unterschiedliche Formen aufweisen. Es kann im Sinne der Erfindung darüber hinaus bevorzugt sein, dass ein Einzelelement aus einem elektrisch leitfähigen Strang besteht, von dem in Richtung eines Eingabebereiches einzelne elektrisch leitfähige Unterbereiche abgehen, die bei einem dynamischen Kontakt zwischen Eingabemittel und Vorrichtung vom Eingabemittel berührt, d.h. aktiviert werden können. Wenn sich nun ein Eingabemittel über den Eingabebereich bewegt, werden einzelne dieser Unterbereiche kontaktiert und/oder aktiviert, so dass sie durch den Kontakt und die damit vorzugsweise verbundene Erdung vom Flächensensor erkannt werden. Durch eine entsprechende Ausgestaltung des Wirkbereichs der elektrisch leitfähigen Struktur können je nach aktivierten Unterbereich unterschiedliche Momentaufnahmen auf dem Flächensensor hervorgerufen werden. Die Umwandlung der Bewegung eines Eingabemittels auf der Vorrichtung in ein zeitlich veränderliches Signal auf einem Flächensensor, das von der räumlichen Ausgestaltung der elektrisch leitfähigen Struktur auf der Vorrichtung abhängt, wird im Sinne der Erfindung bevorzugt als Modulation der dynamischen Eingabe durch die Vorrichtung bezeichnet, die bevorzugt durch die räumliche Ausgestaltung der elektrisch leitfähigen Struktur und am meisten bevorzugt durch die räumlich Anordnung und Gestaltung der funktionalen Bereiche der elektrisch leitfähigen Struktur, vorzugsweise Wirk- und Eingabebereiche, hervorgerufen wird.

In einer weiteren bevorzugten Ausgestaltung der Erfindung liegen die Einzelelemente der elektrisch leitfähigen Struktur galvanisch getrennt voneinander und die funktionalen Bereiche eines Einzelelementes galvanisch miteinander verbunden vor. Die bevorzugte räumliche und/oder galvanische Trennung der Einzelelemente der elektrisch leitfähigen Struktur voneinander kann beispielsweise dadurch erreicht werden, dass jeweils zwei Einzelelemente beabstandet voneinander vorliegen, wobei dieser Abstand zwischen den Einzelelementen innerhalb einer elektrisch leitfähigen Struktur gleich sein oder variieren kann.

Es ist darüber hinaus bevorzugt, dass die funktionalen Bereiche eines Einzelelementes galvanisch miteinander verbunden vorliegen. Dies bedeutet im Sinne der Erfindung bevorzugt, dass je ein Wirkbereich und ein Eingabebereich, die miteinander ein Einzelelement bilden, galvanisch miteinander verbunden vorliegen, d.h. dass elektrische Ladungen zwischen den beiden funktionalen Bereichen ausgetauscht werden können. Dies ermöglicht vorteilhafterweise, dass wenn ein dynamischer Kontakt zwischen einem Eingabemittel, zum Beispiel einem Finger, und einem Eingabebereich besteht, wodurch Ladungsträger beispielsweise vom Eingabemittel auf die Vorrichtung übertragen werden können oder Ladungsträger vom Eingabebereich der elektrisch leitfähigen Struktur der Vorrichtung abgezogen werden können, diese Veränderung hinsichtlich der Ladungsträger vom Eingabebereich auf den Wirkbereich eines Einzelelements übertragbar ist. Wenn also beispielsweise Ladungsträger von einem Eingabebereich auf ein Eingabemittel abfließen und es dadurch zu einer kurzfristigen lokalen Reduzierung der Ladungsträger in dem Bereich kommt, in dem der dynamische Kontakt zwischen Eingabemittel und Eingabebereich stattfindet, so kann diese reduzierte Ladungsträgerdichte vorteilhafterweise dadurch ausgeglichen werden, dass beispielsweise Ladungsträger aus dem Wirkbereich in den Bereich der reduzierten Ladungsträgerdichte fließen, wodurch sich die lokale kurzfristigen Ladungsträgerdichteschwankungen ausgleichen können. Dieser Vorgang führt vorteilhafterweise zu einer verringerten Ladungsträgerdichte im Wirkbereich und zu einer lokalen Änderung der Kapazität auf dem Flächensensor, wodurch das elektrische Feld im Flächensensor, insbesondere zwischen den Sende- und Empfangselektroden, beeinflusst wird.

In einer bevorzugten Ausführungsform der Erfindung wird das zeitabhängiges Signal auf dem kapazitiven Flächensensor dadurch erzeugt, dass die dynamische Eingabe mittels der galvanischen Verbindung zwischen den funktionalen Bereichen eines Einzelelements von den Eingabebereichen der Einzelelemente in den jeweiligen Wirkbereich übertragen wird, wobei die Wirkbereiche der Einzelelemente zumindest teilweise mit dem kapazitiven Flächensensor in einem ersten Wirkkontakt stehen. Es ist demnach bevorzugt, dass eine galvanische Verbindung zwischen den funktionalen Bereichen eines Einzelelements so eingerichtet ist, dass die dynamische Eingabe, die auf der Vorrichtung beziehungsweise ihrer elektrisch leitfähigen Struktur erfolgt, von einem Eingabebereich eines Einzelelements in den jeweiligen Wirkbereich übertragen werden kann. Dies wird insbesondere dadurch ermöglicht, dass die Wirkbereiche der Einzelelemente zumindest teilweise mit dem kapazitiven Flächensensor in einem ersten Wirkkontakt stehen. Der Flächensensorist bevorzugt so eingerichtet, dass er die dynamische Eingabe erkennen kann, die im Bereich der Eingabebereiche der Einzelelemente vorgenommen wird und die mittels der galvanischen Verbindung zwischen Eingabe- und Wirkbereich an den Wirkbereich übertragbar ist, indem der Flächensensor die durch die dynamische Eingabe aktivierten Einzelelemente detektiert. Es ist insbesondere bevorzugt, dass der Flächensensor die Wirkbereiche der Einzelelemente als Momentaufnahme erkennt, auf die sich die dynamische Eingabe aufgrund der galvanischen Verbindung zwischen den funktionalen Bereichen der elektrisch leitfähigen Struktur übertragen hat. Das zeitlich veränderliche Signal, das im Kontext der Erfindung erzeugt wird, ist bevorzugt die zeitliche Abfolge dieser Momentaufnahmen, die vom Flächensensor detektiert werden und die die dynamische Eingabe auf der Vorrichtung widerspiegeln, wobei die dynamische Eingabe auf der Vorrichtung durch die räumliche Ausgestaltung der elektrisch leitfähigen Struktur moduliert wird.

Es ist in einer weiteren bevorzugten Ausgestaltung der Erfindung vorgesehen, dass die dynamische Eingabe durch eine im Wesentlichen kontinuierliche Bewegung eines Eingabemittels entlang der Eingabebereiche der mindestens zwei Einzelelemente erfolgt. Der Begriff der "im Wesentlichen kontinuierlichen Bewegung" ist für den Fachmann nicht unklar, da er weiß, wie ein Eingabemittel, beispielsweise ein Finger, auf einem Smartphone bewegt wird. Zwar handelt es sich im Kontext der Erfindung um eine Bewegung eines Eingabemittels auf einer Vorrichtung beziehungsweise dem Eingabebereich einer elektrisch leitfähigen Struktur, die auf der Vorrichtung angeordnet ist, allerdings erfolgt auch diese bevorzugt wie eine auf einem Smartphone übliche Wischbewegung, wobei Geschwindigkeit und/oder Stärke des Aufdrückens variieren können. Insbesondere erfolgt eine im Wesentlichen kontinuierliche Bewegung bevorzugt stetig und ohne Unterbrechungen, beispielsweise in einer fließenden, gleitenden Bewegung des Eingabemittels über die Eingabebereiche der Einzelelemente, die die elektrisch leitfähige Struktur der Vorrichtung bilden.

Der Begriff "entlang der Eingabebereiche" bedeutet im Sinne der Erfindung bevorzugt, dass die Bewegung so erfolgt, dass bevorzugt nacheinander die Eingabebereiche der Einzelelemente abgefahren werden, wobei das Eingabemittel mit einem oder mehreren der Einzelelemente in Kontakt steht, so dass bevorzugt stets eine kapazitive Kopplung zwischen mindestens einem Einzelelement der elektrisch leitfähigen Struktur und dem Flächensensor vorhanden ist. Es ist im Sinne der Erfindung, dass unterschiedliche zeitabhängige Signale hervorgerufen werden, wenn ein, zwei oder mehrere Einzelelemente gleichzeitig von dem Eingabemittel berührt werden. Es ist darüber hinaus bevorzugt, dass unterschiedliche zeitabhängige Signale hervorgerufen werden, je nachdem welche Einzelelemente gerade vom Eingabemittel berührt werden. Es ist im Sinne der Erfindung bevorzugt, dass dies von der konkreten räumlichen Anordnung und Ausgestaltung der elektrisch leitfähigen Struktur und ihrer Bestandteile abhängt.

In einer bevorzugten Ausführungsform der Erfindung steht das Eingabemittel während der im Wesentlichen kontinuierlichen Bewegung in einem zweiten Wirkkontakt mit den Eingabebereichen der mindestens zwei Einzelelemente, wobei dieser zweite Wirkkontakt vorzugsweise dynamisch ausgebildet ist. Es ist im Sinne der Erfindung bevorzugt, wenn ein dynamischer Wirkkontakt durch eine Bewegung, vorzugsweise durch ein Eingabemittel, bewirkt wird, der vorzugsweise eine zeitliche Dauer und ein Anfangs- und ein Endpunkt zugewiesen werden kann. Es ist bevorzugt, dass die Bewegung am Anfangspunkt der Bewegung beginnt und an ihrem Endpunkt beendet wird, wobei Anfangs- und Endpunkt gleich oder verschieden sein können, wobei bei gleichen Anfangs- und Endpunkten innerhalb der Zeitdauer, die der Bewegung zugeordnet werden kann, mindestens ein dritter Punkt innerhalb des Eingabebereiches der elektrisch leitfähigen Struktur vom Eingabemittel berührt werden muss, damit es sich nicht um einen statischen Kontakt handelt. Es ist im Sinne der Erfindung insbesondere bevorzugt, die Gesamtheit der Eingabebereiche der Einzelelemente als Eingabebereich der elektrisch leitfähigen Struktur zu bezeichnen und Gesamtheit der Wirkbereiche der Einzelelemente als Wirkbereich der elektrisch leitfähigen Struktur.

Es ist in einer weiteren bevorzugten Ausgestaltung der Erfindung vorgesehen, dass das zeitabhängige Signal bezüglich Position, Geschwindigkeit, Richtung, Form, Unterbrechung des Signals, Frequenz und/oder Signalstärke modulierbar ist. Ausgehend von einer beispielhaften dynamischen Eingabe in Form einer geraden, strichförmigen Bewegung auf dem Eingabebereich der elektrisch leitfähigen Struktur bedeutet dies im Sinne der Erfindung bevorzugt, dass das erzeugte zeitabhängige Signal aufgrund der Modulation durch die Vorrichtung, beziehungsweise ihrer elektrisch leitfähigen Struktur, gegenüber der geraden, strichförmigen dynamischen Eingabe eine abweichende Position, Richtung, Form und/oder Signalstärke aufweisen kann, d.h. beispielsweise räumlich versetzt vom Flächensensor erkannt wird, eine andere Form als die gerade, strichförmige Bewegung aufweist, in eine andere Richtung zeigt oder eine unerwartete Signalstärke aufweist.

Es ist im Sinne der Erfindung insbesondere bevorzugt, dass die Vorrichtung dazu eingerichtet ist, ein zeitabhängiges Signal auf dem kapazitiven Flächensensor festzulegen. Dies kann vorzugsweise durch die Modulation einer dynamischen Eingabe erfolgen, wobei das zeitabhängige Signal insbesondere bezüglich Position, Geschwindigkeit, Richtung, Form, Unterbrechung des Signals, Frequenz und/oder Signalstärke modulierbar ist. Es kann im Sinne der Erfindung auch bevorzugt sein, dass die elektrisch leitfähige Struktur so gestaltet ist, dass die dynamische Eingabe bezüglich Position, Geschwindigkeit, Richtung, Form, Unterbrechung des Signals, Frequenz und/oder Signalstärke modulierbar ist und dadurch ein zeitabhängiges Signal auf dem kapazitiven Flächensensor festgelegt wird.

Es kann im Sinne der Erfindung auch bevorzugt sein, dass Abweichungen bei der Geschwindigkeit auftreten, d.h. eine schnelle dynamische Eingabe in ein langsames zeitabhängiges Signal moduliert wird, oder es zu Unterbrechung des Signals kommt, beispielsweise wenn eine kontinuierliche dynamische Eingabe auf einem Eingabebereich der elektrisch leitfähigen Struktur erfolgt, die, bevorzugt bewusst, Lücken aufweist, so dass das zeitabhängige Signal, das vom Flächensensor detektiert wird, Unterbrechungen und/oder Pausen aufweist, d.h. beispielsweise nicht mehr kontinuierlich ist und/oder beispielsweise "hüpft". Es kann darüber hinaus bevorzugt sein, dass durch die Ausgestaltung der elektrisch leitfähigen Struktur auf der Vorrichtung eine dynamische Eingabe Unterbrechungen aufweist und dadurch auch das zeitabhängige Signal mit Unterbrechungen festgelegt wird. Das Signal kann vorzugsweise durch eine Frequenz charakterisiert werden, wenn die Unterbrechungen einer Regelmäßigkeit folgen.

In einer bevorzugten Ausführungsform der Erfindung stehen die Eingabebereiche der Einzelelemente der elektrisch leitfähigen Struktur nicht in Wirkkontakt mit dem Flächensensor. Es hat sich überraschenderweise gezeigt, dass es möglich ist, eine elektrisch leitfähige Struktur auf einer Vorrichtung bereitzustellen, die bevorzugt nicht vollflächig in Kontakt mit der Oberfläche eines Flächensensors sein muss, aber deren Struktur, bevorzugt die Struktur des Wirkbereichs, dennoch vom Flächensensor detektiert werden kann, wenn der Eingabebereich der elektrisch leitfähigen Fläche von einem Eingabemittel berührt wird. Es ist im Sinne der Erfindung insbesondere bevorzugt, dass die Eingabe- und Wirkbereiche der elektrisch leitfähigen Struktur auf unterschiedlichen Seitenflächen der Vorrichtung, beispielsweise einer Unter-, Ober- und/oder Seitenfläche der Vorrichtung angeordnet vorliegen. Im Sinne der Erfindung wird die Anbringung der unterschiedlichen funktionalen Bereiche der elektrisch leitfähigen Struktur auf unterschiedlichen Außenflächen der Vorrichtung bevorzugt als Anbringung in unterschiedlichen Ebenen bezeichnet.

Es ist in einer weiteren bevorzugten Ausgestaltung der Erfindung vorgesehen, dass nur die Wirkbereiche der Einzelelemente der elektrisch leitfähigen Struktur in Wirkkontakt mit Flächensensor stehen. Es ist im Sinne der Erfindung bevorzugt, dass die Wirkbereiche der Einzelelemente vom Flächensensor detektiert werden können, wenn sie in Wirckontakt mit dem Flächensensor vorliegen und die Eingabebereiche der entsprechenden Einzelelemente von einem Eingabemittel durch eine dynamische Eingabe auf der Vorrichtung berührt werden. Es hat sich überraschenderweise gezeigt, dass die Eingabebereiche der Einzelelemente dafür nicht in Kontakt mit dem Flächensensor vorliegen müssen, sondern dass sie vorteilhafterweise auch in einer anderen Ebene der Vorrichtung angeordnet sein können.

In einer bevorzugten Ausführungsform der Erfindung sind die Einzelelemente der elektrisch leitfähigen Struktur im Eingabebereich hinsichtlich Größe, Abstand und Form so dimensioniert, dass zu jedem Zeitpunkt der dynamischen Eingabe mindestens zwei Einzelelemente mindestens teilweise mit dem Eingabemittel in Wirkkontakt stehen. Wenn als Eingabemittel beispielsweise ein Finger benutzt wird, so bedeutet dies bevorzugt, dass die Einzelelemente der elektrisch leitfähigen Struktur im Eingabebereich, d.h. die Eingabebereiche der Einzelelemente, so groß, geformt und beabstandet zueinander sind, dass während der Bewegung, die im Sinne der Erfindung die dynamische Eingabe bewirkt, zu jedem Zeitpunkt i das Eingabemittel in Kontakt mit den Eingabebereichen von mindestens zwei Einzelelementen vorliegt. Dadurch werden vorteilhafterweise auch zwei Wirkbereiche, d.h. die Wirkbereich zweier Einzelelemente, aktiviert, die dann als eine Momentaufnahme M zusammen mit anderen Momentaufnahmen $M_i$ das zeitabhängige Signal hervorrufen. Es ist im Sinne der Erfindung insbesondere bevorzugt, wenn die mindestens zwei Wirkbereiche zu zwei nebeneinanderliegenden Einzelelementen gehören, wobei es für einige Anwendungen auch bevorzugt sein kann, wenn die entsprechenden Einzelelemente nicht nebeneinanderliegen. Es ergibt sich, dass die Eingabebereiche anders beschaffen und/oder ausgestaltet sein müssen, wenn als Eingabemittel ein Stift oder eine andere geeignete Vorrichtung verwendet wird, deren Auflagefläche auf der Vorrichtung beispielsweise kleiner ist als die Auflagefläche eines Fingers.

Es ist in einer weiteren bevorzugten Ausgestaltung der Erfindung vorgesehen, dass ein Verlauf des zeitabhängigen Signals auf dem kapazitiven Flächensensor durch Anordnung, Größe, Abstand und/oder Form der Einzelelemente im Eingabebereich und im Wirkbereich und/oder durch die Richtung und/oder Geschwindigkeit der dynamischen Eingabe bestimmbar ist. Der Verlauf des zeitabhängigen Signals auf dem kapazitiven Flächensensor entspricht im Sinne der Erfindung bevorzugt dem der Detektion der Wirkbereiche und/oder der Detektion der Momentaufnahmen $M_i$, die von den Wirkbereichen der Einzelelemente hervorgerufen werden, durch den Flächensensor in ihrem zeitlichen Verlauf.

Diese Momentaufnahmen $M_i$, die bevorzugt das zeitabhängige Signal bilden, entsprechen nicht notwendigerweise der Bewegung des Eingabemittels auf der Vorrichtung, die beispielsweise auf der Oberfläche des Flächensensors aufliegt, da die dynamische Eingabe durch die Vorrichtung, bevorzugt deren elektrisch leitfähiger Struktur, moduliert und/oder verändert wird. Diese Modulation kann bevorzugt durch Anordnung, Größe, Abstand und/oder Form der funktionalen Bereiche der Einzelelemente erfolgen und/oder durch die Richtung und/oder Geschwindigkeit, mit der die dynamische Eingabe erfolgt, d.h. mit der beispielsweise ein Eingabemittel über die elektrisch leitfähige Struktur der Vorrichtung bewegt wird.

In einem weiteren Aspekt betrifft die Erfindung eine Verwendung der Vorrichtung zur Erzeugung eines zeitabhängigen Signals auf einem kapazitiven Flächensensor, wobei eine elektrisch leitfähige Struktur der Vorrichtung mit dem kapazitiven Flächensensor mindestens teilweise in einem ersten Wirkkontakt steht, wobei die Erzeugung des zeitabhängigen Signals auf dem kapazitiven Flächensensor durch Modulation einer dynamischen Eingabe durch die Vorrichtung erfolgt, so dass das zeitabhängige Signal von der Vorrichtung auf den kapazitiven Flächensensor übertragbar ist.

Auch für diesen Aspekt der Erfindung gelten die hinsichtlich der Vorrichtung ausgeführten bevorzugten Bezeichnungen, technischen Wirkungen und Vorteile der Erfindung. Analog gelten die für die Verwendung genannten technischen Wirkungen und Vorteile auch für die Vorrichtung. Es ist im Sinne der Erfindung bevorzugt, wenn die Vorrichtung gemäß der Erfindung so verwendet wird, dass die Vorrichtung auf einen Flächensensor, insbesondere dessen Oberfläche, aufgelegt wird und die Vorrichtung mit einem Eingabemittel in einen dynamischen Kontakt gebracht wird, um eine dynamische Eingabe auf der Vorrichtung zu erzeugen. Die Vorrichtung umfasst eine elektrisch leitfähige Struktur, die Einzelelemente umfasst, die wiederum Eingabe- und Wirkbereiche umfassten. Es ist bevorzugt, dass die Einzelelemente getrennt voneinander auf der Vorrichtung angeordnet sind, vorzugsweise separat. Der Eingabe- und Wirkbereich eines Einzelbereichs können vorzugsweise in unterschiedlichen Ebenen der Vorrichtung angeordnet sein, beispielsweise auf unterschiedlichen Außenflächen der Vorrichtung. Es ist bevorzugt, dass sie galvanisch miteinander verbunden sind, so dass ein Ladungsträgeraustausch zwischen den unterschiedlichen funktionalen Bereichen erfolgen kann. Mittels dieser galvanischen Verbindung kann die dynamische Eingabe, die vorzugsweise zu einer Veränderung der Ladungsträgersituation im Eingabebereich der elektrisch leitfähigen Struktur führt, in den Wirkbereich der elektrisch leitfähigen Struktur übertragen werden, indem ein Ausgleich unterschiedlicher Ladungsträgerdichten in den unterschiedlichen funktionalen Bereichen der Einzelelemente, bevorzugt den Eingabe- und Wirkbereichen der elektrisch leitfähigen Struktur, ermöglicht wird. Somit erzeugt die dynamische Eingabe auf der Vorrichtung beziehungsweise im Eingabebereich der Vorrichtung bevorzugt auch eine Änderung der Ladungsträgersituation im Wirkbereich der elektrisch leitfähigen Struktur, wobei die geänderte Ladungsträgersituation durch den Flächensensor detektierbar ist.

Es ist im Sinne der Erfindung bevorzugt, dass eine Modulation der dynamischen Eingabe durch die Vorrichtung dadurch erfolgt, dass der Flächensensor die Struktur des Wirkbereichs erkennt, insbesondere die Struktur der Bereiche des Wirkbereichs, der zu einem Zeitpunkt x durch die Berührung der entsprechenden Eingabebereiche der entsprechenden Einzelelemente aktiviert ist, wobei die Struktur, die vom Flächensensor erkannt wird, bevorzugt nicht der Struktur und/oder Form der Bewegung, die die dynamische Eingabe hervorruft entspricht. Der Begriff "Struktur des Wirkbereiches" bedeutet im Sinne der Erfindung aber nicht, dass die Wahrnehmung des Flächensensors eine 1-zu-1-Abbildung der Geometrie des Wirkbereichs der elektrisch leitfähigen Struktur darstellt, sondern vorzugsweise, dass der Flächensensor ein Signal detektiert, das beispielsweise durch die Struktur und die Anordnung der Bestandteile des Wirkbereichs, die zu einem Zeitpunkt i aktiviert sind, verzerrt ist. Es ist somit im Sinne der Erfindung bevorzugt, dass eine dynamische Eingabe eines Eingabemittels durch die elektrisch leitfähige Struktur der Vorrichtung moduliert wird, wobei sich zu jedem Zeitpunkt i die zu diesem Zeitpunkt aktivierten Wirkbereiche gegenseitig beeinflussen können und so ein zeitlich veränderliches Signal auf dem Flächensensor festlegen, dass im Wesentlichen dem Aussehen und der Struktur der Wirkbereiche entspricht, aber durch Wechselwirkungen der Wirkbereiche der Einzelelemente untereinander verzerrt sein kann. Es ist im Sinne der Erfindung insbesondere bevorzugt, die entstehenden Verzerrungen für die Umwandlung der dynamischen Eingabe in ein zeitabhängiges Signal gezielt zu nutzen und so beispielsweise die Datenkapazität und die Fälschungssicherheit der Vorrichtung zu erhöhen.

Die Modulation der dynamischen Eingabe bewirkt bevorzugt eine Abweichung zwischen dynamischer Eingabe und detektierten zeitabhängigen Signal, das von den Momentaufnahmen $M_i$ der detektierten Aktivierungszustände des Wirkbereichs der elektrisch leitfähigen Struktur gebildet wird, wobei die Abbildung dieser Momentaufnahmen $M_i$ verzerrt sein kann. Es ist bevorzugt, dass das zeitabhängige Signal von der Abfolge der gegebenenfalls verzerrten Momentaufnahmen $M_i$ gebildet wird, also bevorzugt der Abfolge der detektierten Aktivierungszustände des Wirkbereichs der elektrisch leitfähigen Struktur, die auf der Vorrichtung angeordnet vorliegt.

Auch im Kontext der Verwendung der Vorrichtung gemäß der Erfindung ist es bevorzugt, dass das zeitabhängige Signal von der Vorrichtung auf den kapazitiven Flächensensor übertragen werden kann, indem die Vorrichtung beziehungsweise die auf ihr angeordnete elektrisch leitfähige Struktur so eingerichtet ist, dass eine dynamische Eingabe moduliert und/oder geändert wird, so dass ein zeitabhängiges Signal auf dem Flächensensor erzeugt wird.

In einem weiteren Aspekt betrifft die Erfindung eine elektrisch leitfähige Struktur für eine erfindungsgemäße Vorrichtung, wobei die elektrisch leitfähige Struktur mindestens zwei Einzelelemente umfasst, die als funktionale Bereiche jeweils einen Eingabebereich und einen Wirkbereich umfassen, wobei die Einzelelemente der elektrisch leitfähigen Struktur galvanisch getrennt voneinander und die funktionalen Bereiche eines Einzelelementes galvanisch miteinander verbunden vorliegen. Es ist im Sinne der Erfindung insbesondere bevorzugt, dass die Ausgestaltung der elektrisch leitfähigen Struktur bestimmt, auf weiche Weise die Modulation der dynamischen Eingabe, durch die das zeitlich veränderbare Signal erzeugt wird, erfolgt. Es war vollkommen überraschend, dass eine Erzeugung eines zeitabhängigen Signals und eine Umwandlung einer dynamischen Eingabe auf einer Vorrichtung in ein zeitlich veränderliches Signal auf einem Flächensensor, sowie dessen Übertragung auf den Flächensensor mittels einer elektrisch leitfähigen Struktur auf einer Vorrichtung ermöglicht werden kann.

Auch für diesen Aspekt der Erfindung gelten die hinsichtlich der Vorrichtung und der Verwendung ausgeführten bevorzugten Bezeichnungen, technischen Wirkungen und Vorteile der Erfindung. Analog gelten die für die elektrisch leitfähige Struktur genannten technischen Wirkungen und Vorteile auch für die Vorrichtung und deren Verwendung. Es ist in einer weiteren bevorzugten Ausgestaltung der Erfindung vorgesehen, dass die Einzelelemente der elektrisch leitfähigen Struktur im Eingabebereich hinsichtlich Größe, Abstand und Form so dimensioniert sind, dass zu jedem Zeitpunkt einer dynamischen Eingabe mindestens zwei Einzelelemente mindestens teilweise mit einem Eingabemittel in Wirkkontakt stehen.

In einer bevorzugten Ausführungsform der Erfindung weisen die Einzelelemente im Eingabebereich eine Breite von 0,5 mm bis 10 mm und einen Abstand von 0,1 mm bis 10 mm auf und/oder die Einzelelemente im Wirkbereich eine Breite von 0,5 mm bis 20 mm und einen Abstand von 0,1 mm bis 20 mm. Durch diese bewusst ausgewählten Abmessungen wird vorteilhafterweise erreicht, dass die Einzelelemente der elektrisch leitfähigen Struktur so eingerichtet sind, dass zu jedem Zeitpunkt $i$ einer dynamischen Eingabe mindestens zwei Einzelelemente, beziehungsweise ihre Eingabebereiche mindestens teilweise mit einem Eingabemittel in Wirkkontakt stehen, wodurch eine Aktivierung der entsprechenden Wirkbereiche und eine Detektierbarkeit dieser Wirkbereiche durch den Flächensensor ermöglicht wird.

In einer bevorzugten Ausführungsform der Erfindung liegen die Eingabebereiche und die Wirkbereiche der Einzelelemente der elektrisch leitfähigen Struktur in unterschiedlichen Ebenen der Vorrichtung angeordnet vor. Damit ist im Sinne der Erfindung bevorzugt gemeint, dass die Eingabe- und Wirkbereiche der Einzelelemente der elektrisch leitfähigen Struktur an unterschiedlichen Außenflächen der Vorrichtung angeordnet sein können. Dadurch kann die Nutzerfreundlichkeit der Vorrichtung erhöht werden, indem die Vorrichtung so ausgestaltet wird, dass sie besonders einfach auf den Flächensensor aufgelegt und die Eingabebereiche der elektrisch leitfähigen Struktur besonders einfach mit einem Eingabemittel in Kontakt gebracht werden können. Darüber hinaus kann die Funktionsfähigkeit der Vorrichtung verbessert werden, indem beispielsweise der Wirkbereich der elektrisch leitfähigen Struktur auf einer Unterseite der Vorrichtung angeordnet vorliegt, so dass ein besonders guter erster Wirkkontakt zwischen Vorrichtung und Flächensensor gebildet wird und eine verbesserte Detektierbarkeit der Wirkbereiche der elektrisch leitfähigen Struktur der Vorrichtung erreicht wird.

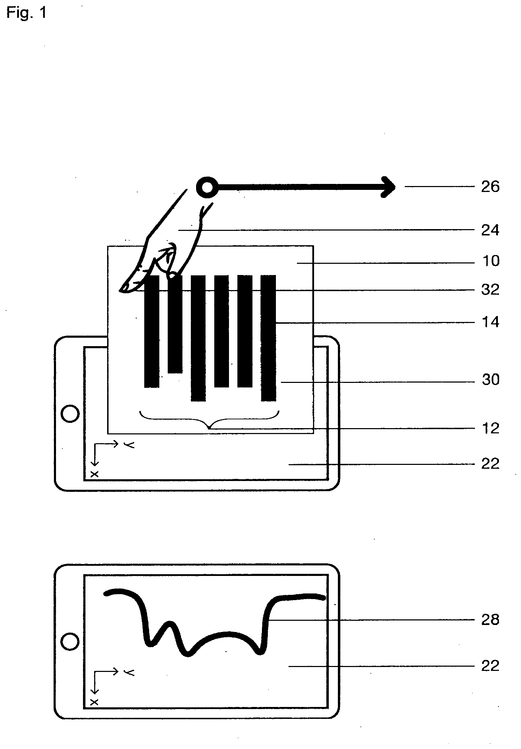

Es ist in einer weiteren bevorzugten Ausgestaltung der Erfindung vorgesehen, dass der Verlauf eines zeitabhängigen Signals wellenartig ist. Es ist im Sinne der Erfindung insbesondere bevorzugt, dass das Signal fortlaufend, entlang einer Linie und/oder einer Auf- und Abbewegung folgend sein kann. Es kann im Sinne der Erfindung bevorzugt sein, dass der räumliche Verlauf des zeitlich veränderbaren Signals auf dem Bildschirm des Flächensensors darstellbar ist oder wiedergegeben werden kann. In dieser Ausführungsform kann das zeitabhängige Signal in der räumlichen Darstellung die bevorzugten Verlaufsmöglichkeiten annehmen. Dies ist besonders dann bevorzugt, wenn die Einzelelemente streifenförmig ausgestaltet sind, wobei die Streifen unterschiedliche Längen aufweisen, die vorzugsweise dem räumlichen Verlauf des zeitabhängigen Signals entsprechen. Diese Ausführungsform wird in Fig. 1 dargestellt.

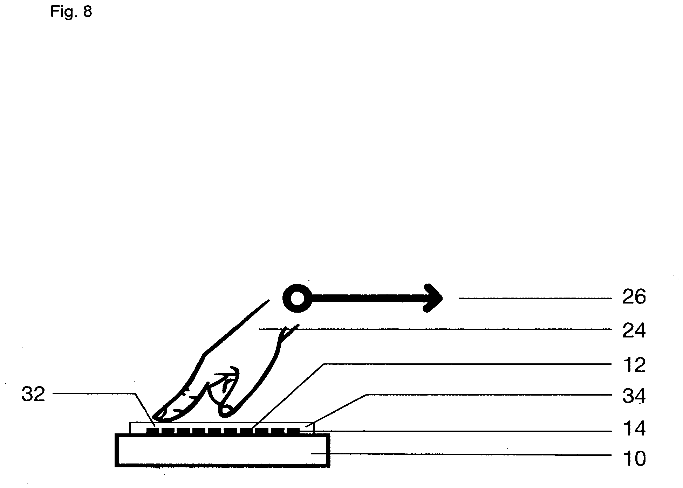

In einer bevorzugten Ausführungsform der Erfindung stellt der Verlauf eines Signals eine Hin- und Herbewegung um einen zentralen Punkt dar. Dies ist besonders dann bevorzugt, wenn die Eingabebereiche der elektrisch leitfähigen Struktur strangförmig ausgebildet sind. In einer bevorzugten Ausführungsform der Erfindung können die Eingabebereiche beispielsweise aus Strängen bestehen, von denen einzelne Unterbereiche abgehen, die mit einem Eingabemittel in Kontakt gebracht werden können, wenn eine Bewegung eines Eingabemittels zur Erzeugung einer dynamischen Eingabe durchgeführt wird. Je nachdem, ob und welche Unterbereiche der einzelnen Stränge bei dieser Bewegung vom Eingabemittel berührt werden, wird ein entsprechender Wirkbereich aktiviert. Die Stränge, die vorzugsweise die Eingabebereiche im Sinne der Erfindung bilden, können so mit den beispielsweise flächig gestalteten Wirkbereichen verbunden vorliegen, dass bei Berührung der Unterbereiche eines ersten Einzelelementes ein erster Wirkbereich aktiviert wird, bei Berührung des Unterbereichs eines zweiten Einzelelements ein zweiter Wirkbereich und bei Berührung des Eingabemittels von Unterbereichen von beiden Einzelelementen ein mittlerer, zusätzlicher Wirkbereich aktiviert wird, der beispielsweise zwischen des ersten und zweiten Wirkbereichen angeordnet vorliegt. Dieser mittlere zusätzliche Wirkbereich kann im Sinne der Erfindung bevorzugt als zentraler Punkt bezeichnet werden, während die Hin- und Herbewegung zwischen dem ersten und dem zweiten Wirkbereich erfolgt. Diese Ausführungsform wird in Fig. 8 dargestellt.

Es ist in einer weiteren bevorzugten Ausgestaltung der Erfindung vorgesehen, dass der Verlauf eines Signals abschnittsweise unterbrochen, d.h. nicht kontinuierlich, ausgebildet ist. Dies kann beispielsweise dadurch erfolgen, dass die Einzelelemente der elektrisch leitfähigen Struktur so weit voneinander beabstandet sind, dass bei der Bewegung zur Erzeugung der dynamischen Eingabe zu einem Zeitpunkt $i$ kein Einzelelement der elektrisch leitfähigen Struktur berührt wird. Es wird in dieser bevorzugten Ausführungsform zu diesem Zeitpunkt i kein Wirkbereich aktiviert und bevorzugt auch kein zeitabhängiges Signal an den Flächensensor übertragen, so dass es zu einer Unterbrechung des zeitabhängigen Signals kommen kann. Diese Ausführungsform der Erfindung kann vorteilhafterweise verwendet werden, um die Vorrichtung als Schalter zum Ein- und Ausschalten von Funktionen auf dem Flächensensor zu benutzen. Für andere Anwendungen kann es ebenso bevorzugt sein, dass das zeitabhängige Signal auf dem Flächensensor einen kontinuierlichen Verlauf aufweist, d.h. nicht unterbrochen ist.

In einer bevorzugten Ausführungsform der Erfindung ist ein erster Wirkkontakt zwischen Wirkbereich und Flächensensor kapazitiv ausgebildet. In einer weiteren bevorzugten Ausgestaltung der Erfindung kann es vorgesehen sein, dass ein zweiter Wirkkontakt zwischen Eingabemittel und Eingabebereich kapazitiv ausgebildet ist. Ein kapazitiver Wirkkontakt hat den Vorteil, dass zwischen Eingabemittel und Eingabebereich der elektrisch leitfähigen Struktur keine galvanische Verbindung bestehen muss, d.h. die elektrisch leitfähige Struktur kann z.B. mittels eines Lacks, einer Farbschicht, einer überdruckten Grafik, eines Labels beziehungsweise Aufklebers oder einer anderen weiteren Schicht abgedeckt sein. Damit ist es möglich, die elektrisch leitfähige Schicht optisch abzudecken und die Oberfläche der Vorrichtung unabhängig von der leitfähigen Struktur ansprechend zu gestalten. Darüber hinaus kann die elektrisch leitfähige Schicht vorteilhafterweise vor mechanischem Abrieb geschützt werden und eine zuverlässigere Funktion bei längerer Benutzung gewährleistet werden.

In einer bevorzugten Ausführungsform der Erfindung wird die elektrisch leitfähige Struktur mittels Folientransferverfahren, die ausgewählt sind aus einer Gruppe umfassend Kaltfolientransfer, Heißprägen und/oder Thermotransfer, auf ein Substratmaterial aufgetragen. Es ist im Sinne der Erfindung bevorzugt, dass die Vorrichtung das Substratmaterial umfasst, beispielsweise indem das Substrat eine Außenfläche der Vorrichtung darstellt. Auf diese wird dann beispielsweise die elektrisch leitfähige Struktur mittels der bevorzugten Verfahren aufgebracht. Es ist in einer weiteren bevorzugten Ausgestaltung der Erfindung vorgesehen, ohne darauf beschränkt zu sein, dass die elektrisch leitfähige Struktur mittels Druckverfahren, die ausgewählt sind aus einer Gruppe umfassend Offsetdruck, Tiefdruck, Flexodruck, Siebdruck, Inkjet und/oder mittels elektrisch leitfähiger Farben, die ausgewählt sind aus einer Gruppe basierend auf Metallpartikeln, Nanopartikeln, Kohlenstoff, Graphen und/oder elektrisch leitfähigen Polymeren, auf ein Substratmaterial aufgetragen wird.

Es ist in einer weiteren bevorzugten Ausgestaltung der Erfindung vorgesehen, dass die elektrisch leitfähige Struktur durch mindestens eine weitere Schicht abgedeckt ist, wobei diese Schicht ein papier- oder folienbasiertes Laminatmaterial oder mindestens eine Lack-/Farbschicht sein kann. Diese Schicht kann optisch transparent oder opak ausgebildet sein.

In einem weiteren Aspekt betrifft die Erfindung ein Verfahren zur Erzeugung eines zeitabhängigen Signals auf einem kapazitiven Flächensensor, wobei eine Vorrichtung eine elektrisch leitfähige Struktur umfasst und mit einem kapazitiven Flächensensor mindestens teilweise in einem ersten Wirkkontakt steht, wobei das zeitabhängige Signal in Abhängigkeit von der Ausgestaltung der elektrisch leitfähigen Struktur festgelegt wird. Es ist im Sinne der Erfindung insbesondere bevorzugt, dass die dynamische Eingabe durch eine im Wesentlichen kontinuierliche Bewegung eines Eingabemittels entlang der Eingabebereiche der mindestens zwei Einzelelemente erfolgt. Ferner kann das Eingabemittel während der im Wesentlichen kontinuierlichen Bewegung in einem zweiten Wirkkontakt mit den Eingabebereichen der mindestens zwei Einzelelemente stehen. Es ist insbesondere bevorzugt, dass die Erfindung ein Verfahren zur Erzeugung eines zeitabhängigen Signals auf einem kapazitiven Flächensensor betrifft, wobei eine Vorrichtung eine elektrisch leitfähige Struktur umfasst und mit einem kapazitiven Flächensensor mindestens teilweise in einem ersten Wirkkontakt steht, wobei das zeitabhängige Signal in Abhängigkeit von der Ausgestaltung der elektrisch leitfähigen Struktur festgelegt wird. In einer bevorzugten Ausführungsform des Verfahrens wird das zeitabhängige Signal in Abhängigkeit von der Ausgestaltung der Wirkbereiche der elektrisch leitfähigen Struktur festgelegt.

Bei der Vorrichtung zur Durchführung des Verfahrens kann es sich bevorzugt um eine erfindungsgemäße Vorrichtung handeln oder um eine Vorrichtung gemäß einer oder mehrerer bevorzugter Ausführungsformen der Erfindung. Es kann ebenso bevorzugt sein, dass zur Durchführung des Verfahrens ein System umfassend eine solche Vorrichtung und ein Flächensensor verwendet wird. Das Verfahren und das System werden insbesondere durch die Merkmale der Vorrichtung und/oder der elektrisch leitfähigen Struktur charakterisiert. Die beschriebenen Vorteile und technischen Wirkungen der Vorrichtung und/oder der elektrisch leitfähigen Struktur gelten vorzugsweise analog für das System und das Verfahren.

Das Verfahren umfasst vorzugsweise die folgenden Schritte:

a) Bereitstellung eines kapazitiven Flächensensors und einer Vorrichtung umfassend eine elektrisch leitfähige Struktur,

b) Herstellung eines ersten Wirkkontakts zwischen der Vorrichtung und dem Flächensensor,

c) Bewegung eines Eingabemittels auf der elektrisch leitfähigen Struktur der Vorrichtung, wodurch ein zweiter Wirkkontakt erzeugt wird,

d) Umwandlung der Bewegung des Eingabemittels in ein zeitabhängiges Signal, wobei das zeitabhängige Signal in Abhängigkeit von einer Ausgestaltung der elektrisch leitfähigen Struktur erzeugt wird,

e) Detektierung des zeitabhängigen Signals durch den Flächensensor.

Es ist im Sinne der Erfindung bevorzugt, dass insbesondere die Wirkbereiche der elektrisch leitfähigen Struktur mit dem Flächensensor in direktem Kontakt zur Bildung des ersten Wirkkontakts vorliegen, während der zweite Wirkkontakt, der vorzugsweise dynamisch ausgebildet ist, zwischen dem Eingabemittel und dem Eingabebereich der elektrisch leitfähigen Struktur der Vorrichtung besteht. Es kann beispielsweise bevorzugt sein, dass es sich bei der Vorrichtung um ein dreidimensional ausgebildetes Objekt handelt, wobei die Wirkbereiche der elektrisch leitfähigen Struktur beispielsweise auf der Unterseite der Vorrichtung vorliegen und die Unterseite der Vorrichtung auf dem Flächensensor aufliegt. In diesem Beispiel kann es weiter bevorzugt sein, dass die Eingabebereiche der elektrisch leitfähigen Struktur auf einer Seitenfläche der Vorrichtung angeordnet vorliegen, so dass ein Berühren des Eingabebereichs beziehungsweise seiner Elemente erleichtert wird. Die Umwandlung der Bewegung des Eingabemittels in ein zeitabhängiges Signal und die Detektierung des Signals werden im Sinne der Erfindung bevorzugt als Übertragung des Signals von der Vorrichtung auf den Flächensensor bezeichnet.

Die Erfindung wird anhand der nachfolgenden Figuren näher beschrieben; es zeigt:

Figur 1     Darstellung einer bevorzugten Ausführungsform der Vorrichtung zur Erzeugung eines zeitabhängigen Signals auf einem kapazitiven Flächensensor

Figur 2     Darstellung einer bevorzugten Ausführungsform der Vorrichtung, die eine elektrisch leitfähige Struktur aufweist, die aus galvanisch voneinander getrennten streifenförmigen Einzelelementen besteht

Figur 3     Darstellung einer bevorzugten Ausführungsform der Vorrichtung, die eine elektrisch leitfähige Struktur aufweist, die strangförmige Einzelelemente umfasst

Figur 4     beispielhafte Darstellung der dynamischen Eingabe und des erzeugten zeitabhängigen Signals bei der bevorzugten Ausführungsform der Erfindung mit streifenförmigen Einzelelementen

Figur 5     Darstellung einer bevorzugten Ausführungsform der Vorrichtung, die eine elektrisch leitfähige Struktur aufweist, die aus galvanisch voneinander getrennten streifenförmigen Einzelelementen besteht und Darstellung einer bevorzugten Ausführungsform der beiden funktionalen Bereiche "Eingabebereich" und "Wirkbereich"

Figur 6     Ausführungsbeispiele der elektrisch leitfähigen Struktur

Figur 7     Ausführungsbeispiel, bei dem die Einzelelemente der elektrisch leitfähigen Struktur im Eingabebereich hinsichtlich Größe, Abstand und Form so dimensioniert sind, dass zu jedem Zeitpunkt der dynamischen Eingabe mindestens zwei Einzelelemente mindestens teilweise mit dem Eingabemittel in Wirkkontakt stehen

Figur 8     Ausführungsbeispiel, bei dem der zweite Wirkkontakt zwischen Eingabemittel und Eingabebereich kapazitiv ausgebildet ist und die elektrisch leitfähige Struktur durch mindestens eine weitere Schicht abgedeckt ist

Figur 9     Ausführungsvarianten für die elektrisch leitfähige Struktur

Figur 10     Ausführungsvarianten für die elektrisch leitfähige Struktur

Figur 11     bevorzugte Ausführungsform der Vorrichtung mit einer elektrisch leitfähigen Struktur, die mit dem kapazitiven Flächensensor mindestens teilweise in einem ersten Wirkkontakt steht

Figur 12    bevorzugte Ausführungsform der Vorrichtung bei der der Eingabebereich und der Wirkbereich der elektrisch leitfähigen Struktur in unterschiedlichen Ebenen der Vorrichtung angeordnet vorliegen

Figur 13    beispielhafte Anordnung der elektrisch leitfähigen Struktur auf einem Zylinder

Figur 14    bevorzugte Ausführungsform der Vorrichtung bei der der Eingabebereich und der Wirkbereich der elektrisch leitfähigen Struktur in unterschiedlichen Ebenen der Vorrichtung angeordnet vorliegen und nur der Wirkbereich mit dem kapazitiven Flächensensor (nicht dargestellt) in Wirkkontakt steht

Figur 1 zeigt eine Ausführungsform der Vorrichtung (10) zur Erzeugung eines zeitabhängigen Signals (28) auf einem kapazitiven Flächensensor (22). Die Vorrichtung (10) umfasst eine elektrisch leitfähige Struktur (12), die mindestens teilweise mit dem kapazitiven Flächensensor (22) in einem ersten Wirkkontakt (30) steht und mit einem Eingabemittel (24) mindestens teilweise in einem zweiten Wirkkontakt (32) steht. Die Erzeugung des zeitabhängigen Signals (28) auf dem kapazitiven Flächensensor (22) erfolgt durch Modulation einer dynamischen Eingabe, die durch das Eingabemittel (24) auf der elektrisch leitfähigen Struktur (12) erfolgt, sowie durch Übertragung der dynamischen Eingabe auf den kapazitiven Flächensensor (22). Dadurch wird auf dem kapazitiven Flächensensor (22) ein zeitabhängiges Signal (28) erzeugt. Der Pfeil markiert die Bewegung (26), mit der die dynamische Eingabe auf der Vorrichtung (10) beziehungsweise auf der elektrisch leitfähigen Struktur (12) erfolgt.

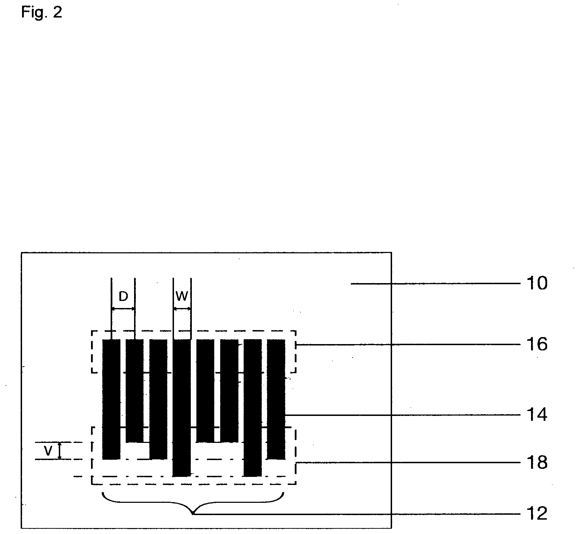

Figur 2 zeigt eine Ausführungsform der Vorrichtung (10), die eine elektrisch leitfähige Struktur (12) aufweist, die aus galvanisch voneinander getrennten Einzelelementen (14) besteht. Die elektrisch leitfähige Struktur (12) umfasst als funktionale Bereiche (16, 18) jeweils einen Eingabebereich (16) und einen Wirkbereich (18). Bei dieser Ausführungsform wird die Form der Einzelelemente (14) in der Beschreibung als streifenförmig beschrieben. Die Form der Einzelelemente (14) kann zum Beispiel rechteckig sein. Das Design der elektrisch leitfähigen Struktur (12) ist durch folgende Kennwerte charakterisierbar:

- •   Anzahl der Einzelelemente N
- •   Breite des Einzelelements W
- •   Abstand D zwischen den Einzelelementen
- •   Anordnung der Elemente in X Stufen
- •   Stufenabstand V

Die Gesamtbreite $W_{ges}$ der elektrisch leitfähigen Struktur (12) kann berechnet werden als

$$W_{ges} = W + (N - 1) * D$$

Die Mindesttiefe $T_{ges}$ des Wirkbereichs (18) der elektrisch leitfähigen Struktur (12) kann berechnet werden als

$$T_{ges} = X * V$$

Daraus ergibt sich ein Flächenbedarf $A_{ges}$ für den Wirkbereich (18) der elektrisch leitfähigen Struktur (12) von

$$A_{ges} = W_{ges} \times T_{ges}$$

Die theoretische Datenkapazität C berechnet sich nach

$$C = X^N$$

Zur besonders sicheren Auswertung des zeitabhängigen Signals (28) auf dem kapazitiven Flächensensor (22) kann es von Vorteil sein zum Beispiel das erste und letzte Einzelelement (14) einer elektrisch leitfähigen Struktur (12) in der Nullposition anzuordnen. In dieser bevorzugten Ausführungsform berechnet sich die theoretische Datenkapazität C wie folgt:

$$C = X^{(N-2)}$$

Die resultierende Datendichte $C_A$ (Datenkapazität pro Fläche eines Wirkbereichs (18)) ergibt sich bevorzugt zu

$$C_A = \frac{C}{A_{ges}}$$

Die folgende Tabelle gibt einen Überblick über konkrete bevorzugte Ausführungsbeispiele. Die Beispiele orientieren sich an Außenabmessungen von kleineren Verpackungen, die beispielhaft als Vorrichtungen (10) verwendet werden, und sind auf beliebige andere Formate anwendbar.

| Beispiel | N | W / mm | L / mm | D / mm | X | V / mm | W_ges / mm | T_ges / mm | A_ges / mm2 | C |
|---:|---|---|---|---|---|---|---|---|---|---:|
| 1 | 8 | 5 | variabel | 6 | 3 | 5 | 47 | 15 | 705 | 6.561 |
| 2 | 10 | 5 | variabel | 6 | 5 | 5 | 59 | 25 | 1.475 | 9.765.625 |
| 3 | 12 | 4 | variabel | 5 | 5 | 4 | 59 | 20 | 1.180 | 244.140.625 |
| 3A | 12 | 4 | variabel | 5 | 5 | 4 | 59 | 20 | 1.180 | 9.765.625 |

Diese theoretischen Werte sind vorzugsweise Bruttowerte. Die Nutzdaten können durch Implementierung von Prüfsummen, Redundanz oder Fehlererkennungs- und/oder -korrekturalgorithmen geringer ausfallen.

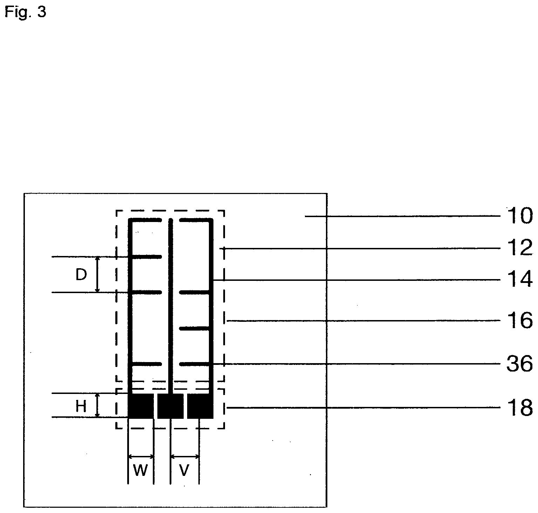

Figur 3 zeigt eine Ausführungsform der Vorrichtung (10) mit einer elektrisch leitfähigen Struktur (12), die mindestens zwei galvanisch voneinander getrennte Einzelelemente (14) umfasst, die als funktionale Bereiche (16, 18) jeweils einen Eingabebereich (16) und einen Wirkbereich (18) umfassen. Bei dieser bevorzugten Ausführungsform der Erfindung wird die Form der Einzelelemente (14) in der Beschreibung als strangförmig beschrieben. Die strangförmigen Einzelelemente (14) umfassen jeweils mehrere Unterbereiche (36). Das Design der elektrisch leitfähigen Struktur (12) ist durch folgende Kennwerte charakterisierbar:

- Anzahl der Unterbereiche N bei strangförmig ausgebildeten Einzelelementen
- Abstand D zwischen den Unterbereichen
- Breite des Einzelelements im Wirkbereich W
- Höhe des Einzelelements im Wirkbereich H
- Anordnung der Einzelelemente in X Stufen
- Stufenabstand V der Einzelelemente im Wirkbereich

Die Gesamtbreite $W_{ges}$ der elektrisch leitfähigen Struktur (12) im Wirkbereich (18) kann berechnet werden als:

$$W_{ges} = W + (X - 1) * V$$

Die Mindesttiefe $T_{ges}$ des Wirkbereichs (18) der elektrisch leitfähigen Struktur (12) ist

$$T_{ges} = H$$

Daraus ergibt sich ein Flächenbedarf $A_{ges}$ für den Wirkbereich (18) der elektrisch leitfähigen Struktur (12) von

$$A_{ges} = W_{ges} \times T_{ges}$$

Die theoretische Datenkapazität C berechnet sich nach

$C = X^N$

Die daraus resultierende Datendichte $C_A$ (Datenkapazität pro Fläche des Wirkbereichs (18)) ist

$$C_{A^{\cdot}} = \frac{C}{A_{ges}}$$

Die folgende Tabelle gibt einen Überblick über konkrete Ausführungsbeispiele. Die Beispiele orientieren sich an Außenabmessungen von kleinen Verpackungen, die beispielsweise als Vorrichtung (10) im Sinne der Erfindung verwendet werden können, und sind auf beliebige andere Formate anwendbar.

| Beispiel | N | W / mm | H / mm | D / mm | X | V / mm | W_ges / mm | T_ges / mm | A_ges / mm2 | C |
|---|---|---|---|---|---|---|---|---|---|---|
| 1 | 5 | 5 | 5 | 7 | 3 | 6 | 17 | 5 | 85 | 243 |
| 2 | 8 | 5 | 5 | 7 | 3 | 6 | 17 | 5 | 85 | 6.561 |
| 3 | 8 | 5 | 10 | 7 | 4 | 6 | 17 | 10 | 170 | 65.536 |
| 3A | 8 | 5 | 10 | 7 | 4 | 6 | 17 | 10 | 170 | 4.096 |

Diese theoretischen Werte sind Bruttowerte. Die Nutzdaten können durch Implementierung von Prüfsummen, Redundanz oder Fehlererkennungs- und/oder -korrekturalgorithmen geringer sein.

Es hat sich überraschenderweise gezeigt, dass die elektrisch leitfähige Struktur eine Datenkapazität von bevorzugt mindestens 10 bit, besonders bevorzugt mindestens 12 bit erreichen kann, wobei die Datenkapazität mit der Größe der elektrisch leitfähigen Struktur skalierbar ist und in einer elektrisch leitfähigen Struktur mindestens 2000 Codes gespeichert werden können, besonders bevorzugt 5000 Codes, am meisten bevorzugt 6500 Codes, wobei die Anzahl der Codes mit der Größe der elektrisch leitfähigen Struktur skalierbar ist.

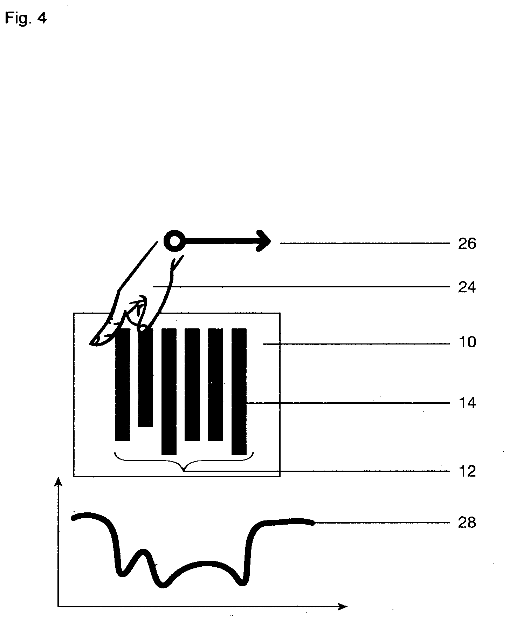

Figur 4 zeigt die elektrisch leitfähige Struktur (12) der Vorrichtung (10) zur Erzeugung eines zeitabhängigen Signals (28) auf einem kapazitiven Flächensensor (nicht dargestellt), wobei die Erzeugung des zeitabhängigen Signals (28) auf dem kapazitiven Flächensensor durch Modulation einer dynamischen Eingabe durch die elektrisch leitfähige Struktur der Vorrichtung (10) erfolgt. Der Pfeil markiert die Bewegung (26), mit der die dynamische Eingabe auf der Vorrichtung (10) beziehungsweise auf dem Eingabebereich (zur besseren Übersichtlichkeit nicht beschriftet) der elektrisch leitfähigen Struktur der Vorrichtung (10) erfolgen kann. Der untere Teil der Figur zeigt, wie der Verlauf des zeitabhängigen Signals (28) der Ausgestaltung der elektrisch leitfähigen Struktur, insbesondere der Wirkbereiche (zur besseren Übersichtlichkeit nicht beschriftet) entspricht. Figur 4 verdeutlicht, wie die beispielsweise lineare, strichförmige Bewegung (26) des Eingabemittels (24), hier einer Hand, durch die geometrische Gestalt der elektrisch leitfähigen Struktur in ein Signal (28) umgewandelt wird, das keine strichförmige, sondern eine gegenüber der dynamischen Eingabe abgeänderte Form und einen abgeänderten Verlauf aufweist. Dieser Umwandlungsvorgang wird im Sinne der Erfindung vorzugsweise als Modulation bezeichnet. Es kann im Sinne der Erfindung bevorzugt sein; den Verlauf des zeitlich veränderbaren Signals (28) auf einem Display des Flächensensors anzuzeigen.

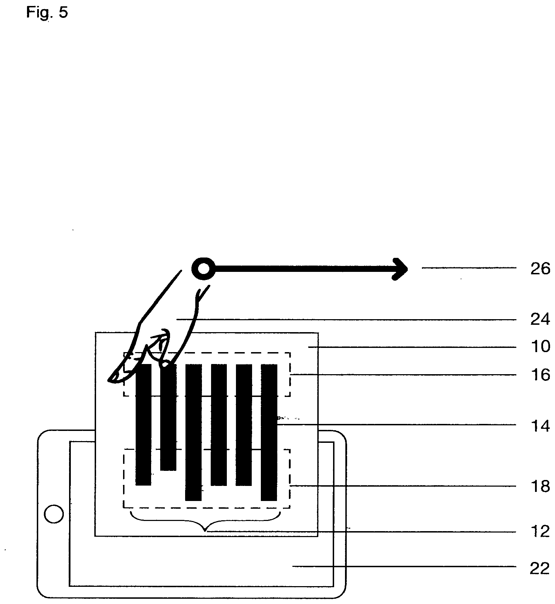

Figur 5 zeigt eine Vorrichtung (10) zur Erzeugung eines zeitabhängigen Signals (nicht dargestellt) auf einem kapazitiven Flächensensor (22) umfassend eine elektrisch leitfähige Struktur (12), die aus mindestens zwei Einzelelementen (14) besteht, die als funktionale Bereiche (16, 18) jeweils einen Eingabebereich (16) und einen Wirkbereich (18) umfassen. Der Wirkbereich (18) der Vorrichtung (10) ist mit dem kapazitiven Flächensensor (22) in Kontakt. Der Pfeil markiert die Bewegung (26), mit der die dynamische Eingabe auf der Vorrichtung (10) beziehungsweise auf dem Eingabebereich (16) der elektrisch leitfähigen Struktur der Vorrichtung (10) erfolgen kann.

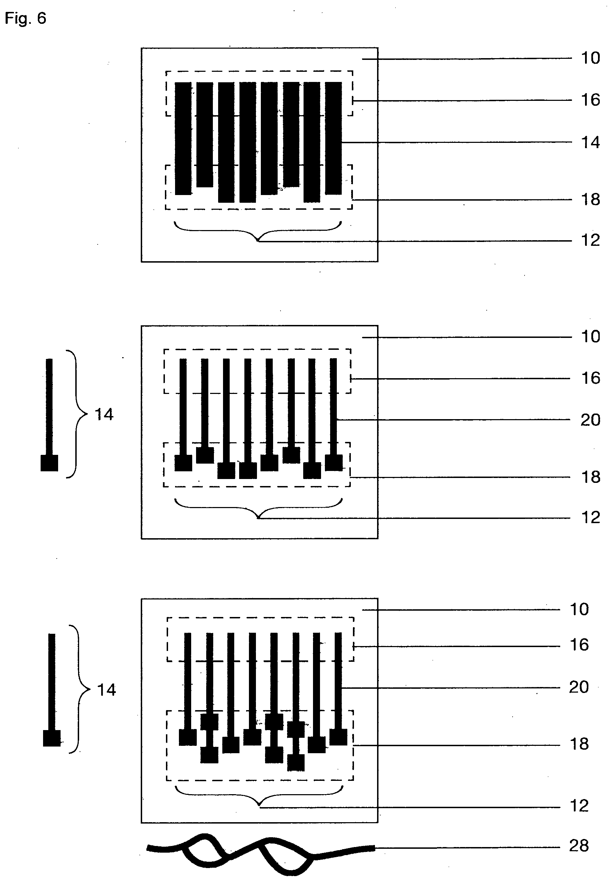

Figur 6 zeigt Ausführungsbeispiele der elektrisch leitfähigen Struktur (12), die auf der Vorrichtung (10) angeordnet vorliegt. Die obere Figur zeigt eine Vorrichtung (10) mit einer elektrisch leitfähigen Struktur (12), deren Einzelelemente (14) von einzelnen Streifen gebildet wird, die in einem äquidistanten Abstand zueinander angeordnet sind. Der obere Bereich der elektrisch leitfähigen Struktur (12), bei dem die Streifen auf gleicher Höhe anfangen, wird im Sinne der Erfindung bevorzugt als Eingabebereich (16) bezeichnet, während der untere Bereich der Streifen, d.h. der Einzelelemente (14), vorzugsweise als Wirkbereich (18) bezeichnet wird. Es kann im Sinne der Erfindung bevorzugt sein, eine mittlere Höhe der Einzelelemente (14) als Nullposition zu bezeichnen und von ihr ausgehend längere oder kürzere Einzelelemente (14) durch ihren Stufenabstand beschreiben, der vorzugsweise die Differenz zwischen tatsächlicher Länge des Einzelelements (14) und der Nullposition entspricht.

Im mittleren Ausführungsbeispiel sind die Wirkbereiche (18) der Einzelelemente (14) der elektrisch leitfähigen Struktur (12) als Rechtecke ausgebildet, während der Eingabebereich (16) und die galvanische Verbindung (20) strich- oder streifenförmig ausgebildet ist.

Das untere Ausführungsbeispiel zeigt Einzelelemente (14), die zum Teil im Wirkbereich (18) mehrere Unterelemente umfassen. Die darunterliegende Linie zeigt einen beispielhaften Verlauf des zeitlich veränderlichen Signals (28), der durch eine so gestaltete elektrisch leitfähige Struktur (12) erzeugt werden kann. Das zeitabhängige Signal (28) kann durch die spezielle Anordnung der elektrisch leitfähigen Struktur (12) in Spuren aufgeteilt und auch wieder zusammengeführt werden; in den entsprechenden Bereichen entsteht somit bevorzugt ein geteiltes zeitlich veränderliches Signal (28). In der Abbildung sind zwei Spuren dargestellt, es können aber auch mehr als zwei Spuren vorgesehen sein.

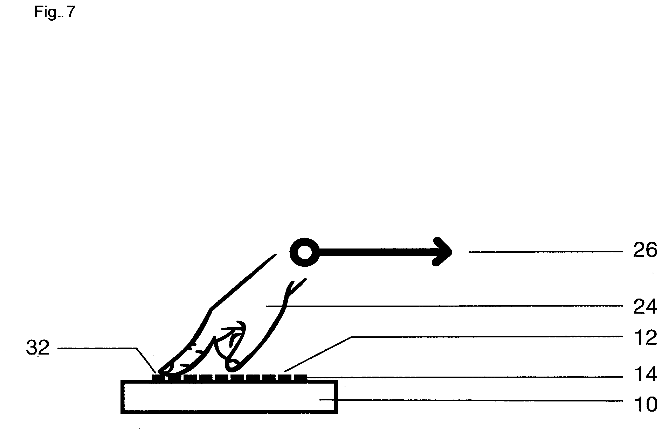

Figur 7 zeigt ein Ausführungsbeispiel der Vorrichtung (10), bei dem die Einzelelemente (14) der elektrisch leitfähigen Struktur (12) im Eingabebereich (16) hinsichtlich Größe, Abstand und Form so dimensioniert sind, dass zu jedem Zeitpunkt der dynamischen Eingabe mindestens zwei Einzelelemente (14) mindestens teilweise mit dem Eingabemittel (24) in Wirkkontakt (32) stehen.

Figur 8 zeigt ein Ausführungsbeispiel der Erfindung, bei dem der zweite Wirkkontakt (32) zwischen Eingabemittel (24) und den Einzelelementen (14) der elektrisch leitfähigen Struktur (12) kapazitiv ausgebildet ist und die elektrisch leitfähige Struktur (12) durch mindestens eine weitere Schicht (34) abgedeckt ist, wobei diese Schicht (34) ein papier- oder folienbasiertes Laminatmaterial und/oder mindestens eine Lack-und/oder Farbschicht sein kann.

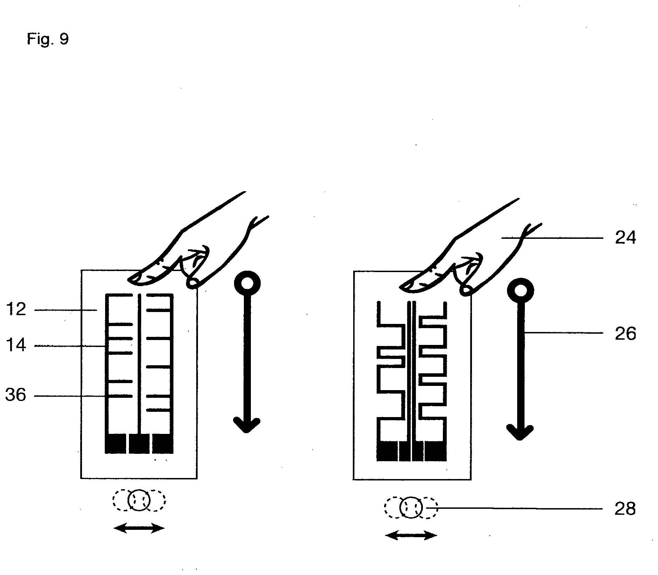

Figur 9 zeigt mögliche bevorzugte Ausführungsvarianten für die elektrisch leitfähige Struktur (12), wobei insbesondere strangförmige Einzelelemente (14) dargestellt sind. Die Hand stellt eine bevorzugte Ausführungsform des Eingabemittels (24) dar; der Pfeil markiert die Richtung der Bewegung (26), mit der die dynamische Eingabe im Eingabebereich (zur besseren Übersichtlichkeit nicht beschriftet) der elektrisch leitfähigen Struktur (12) bewirkt wird. Das im Wirkbereich (zur besseren Übersichtlichkeit nicht beschriftet) der elektrisch leitfähigen Struktur (12) erzeugte zeitabhängige Signal (28) kann durch die Anordnung, Lage und Größe der Einzelelemente (14) der elektrisch leitfähigen Struktur (12) jeweils drei verschiedene Stufen einnehmen, wobei diese Stufen vorzugsweise durch die als Rechtecke ausgestalteten Wirkbereiche der Einzelelemente (14) der elektrisch leitfähigen Struktur (12) markiert werden. Wenn das Eingabemittel (24) bevorzugt mittig zwischen den Einzelelementen (14) eine Bewegung (26) in Richtung des Pfeils ausführt, werden durch die Bewegung (26) nacheinander unterschiedliche Unterbereiche (36) der Einzelelemente (14) berührt und dadurch unterschiedliche Wirkbereiche aktiviert und für den Flächensensor (nicht dargestellt) "sichtbar". Wenn beispielsweise nur ein Unterbereich (36) des linken Strangs, d.h. des linken Einzelelements (14) vom Eingabemittel (24) kontaktiert wird, "sieht" der Flächensensor nur den linken Wirkbereich, der den unteren Bereich des linken Einzelelements (14) bildet. Wenn dahingegen nur ein Unterbereich (36) des rechten Strangs, d.h. des rechten Einzelelements (14) vom Eingabemittel (24) kontaktiert wird, "sieht" der Flächensensor nur diesen rechten Wirkbereich, der den unteren Bereich des rechten Einzelelements (14) bildet. Wenn zu einem Zeitpunkt i Unterbereiche von beiden Strängen gleichzeitig vom Eingabemittel (24) berührt werden, wird der mittlere Wirkbereich aktiviert, wobei die unterschiedlichen Aktivierungszustände in Figur 8 durch die Kreise dargestellt werden.

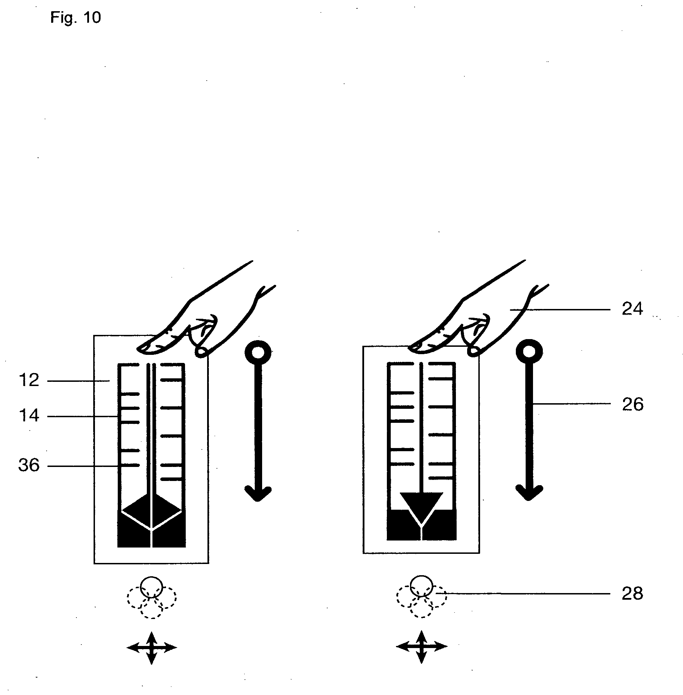

Figur 10 zeigt weitere mögliche Ausführungsvarianten für die elektrisch leitfähige Struktur (12). Das im Wirkbereich (zur besseren Übersichtlichkeit nicht beschriftet) der elektrisch leitfähigen Struktur (12) erzeugte zeitabhängige Signal (28) kann in dem in Figur 9 dargestellten Ausführungsbeispiel vorteilhafterweise bis zu vier verschiedene Stufen beziehungsweise Positionen einnehmen.

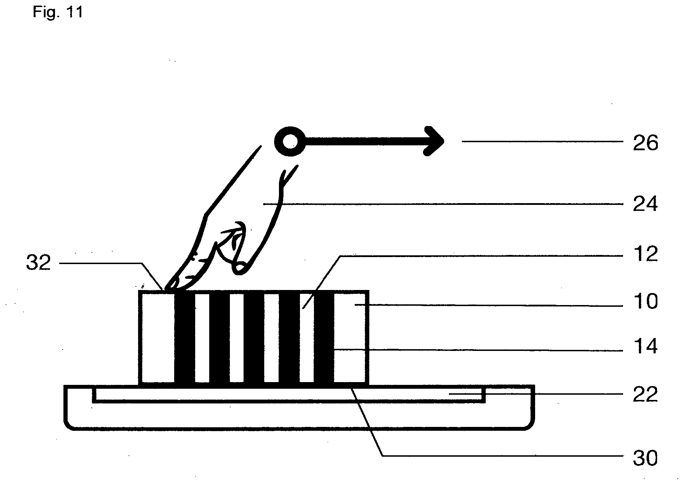

Figur 11 zeigt eine bevorzugte Ausführungsform der Vorrichtung (10) mit einer elektrisch leitfähigen Struktur (12), die mit dem kapazitiven Flächensensor (22) mindestens teilweise in einem ersten Wirkkontakt (30) steht, wobei das zeitabhängiges Signal (nicht dargestellt) auf dem kapazitiven Flächensensor (22) dadurch erzeugt wird, dass die dynamische Eingabe zwischen den funktionalen Bereichen eines Einzelelements (14) von den Eingabebereichen (zur besseren Übersichtlichkeit nicht beschriftet) der Einzelelemente (14) in den jeweiligen Wirkbereich (zur besseren Übersichtlichkeit nicht beschriftet) übertragen wird, wobei die Wirkbereiche der Einzelelemente (14) zumindest teilweise mit dem kapazitiven Flächensensor (22) in einem ersten Wirkkontakt (30) stehen. Die Hand stellt eine bevorzugte Ausführungsform des Eingabemittels (24) dar und steht mit der Vorrichtung in einem zweiten Wirkkontakt (32). Der Pfeil markiert die Richtung der Bewegung (26), mit der die dynamische Eingabe im Eingabebereich der elektrisch leitfähigen Struktur (12) bewirkt wird. Im in Figur 10 gezeigten Ausführungsbeispiel der Erfindung liegt die elektrisch leitfähige Struktur (12) zumindest teilweise an einer Oberseite einer Vorrichtung (10) vor, die im dargestellten Beispiel von einer quaderförmigen Verpackung dargestellt wird.

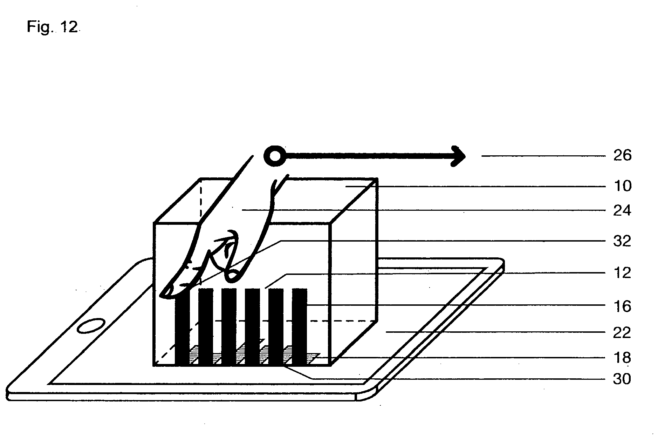

Figur 12 zeigt eine bevorzugte Ausführungsform der Vorrichtung (10), bei der der Eingabebereich (16) und der Wirkbereich (18) der elektrisch leitfähigen Struktur (12) in unterschiedlichen Ebenen der Vorrichtung (10) angeordnet vorliegen. Es ist bevorzugt, dass nur der Wirkbereich (18) mit dem kapazitiven Flächensensor (22) in einem ersten Wirckontakt (30) steht. Der Eingabebereich (16) steht mit dem Eingabemittel (24) in einem zweiten Wirkkontakt (32). Im dargestellten Beispiel liegt der Eingabebereich (16) der elektrisch leitfähigen Struktur (12) an einer Seitenfläche der Vorrichtung (10) vor, während der Wirkbereich (18) der elektrisch leitfähigen Struktur (12) an einer Unterseite der Vorrichtung (10) vorliegt, wobei die Vorrichtung (10) im dargestellten Beispiel von einer quaderförmigen Verpackung gebildet wird. Der Flächensensor (22) ist in diesem Ausführungsbeispiel in einem Smartphone integriert.

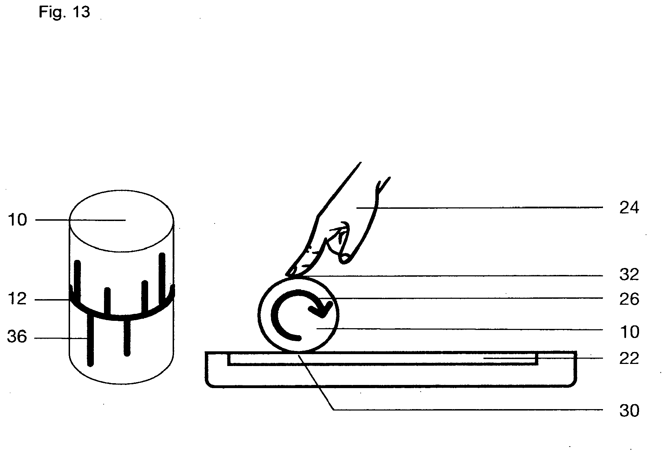

Figur 13 zeigt eine bevorzugte Anordnung der elektrisch leitfähigen Struktur (12) auf einer zylinderförmigen Vorrichtung (10). In diesem Fall sind die Einzelelemente der elektrisch leitfähigen Struktur (12) über einen umlaufenden Hauptstrang miteinander verbunden, wobei die Einzelelemente vorzugsweise von Unterbereichen (36) gebildet werden können. Der Benutzer stellt einen zweiten Wirkkontakt (32) her indem er den Zylinder im Bereich des Hauptstranges berührt und den Zylinder rollend über den kapazitiven Flächensensor (22) bewegt. Diese Berührung kann selbstverständlich auch unter Verwendung eines Eingabemittels (24) erfolgen. Die Anordnung der Unterbereiche (36), die zum jeweiligen Zeitpunkt mit dem kapazitiven Flächensensor (22) in Wirkkontakt (30) stehen, erzeugen ein Signal (nicht dargestellt) auf dem kapazitiven Flächensensor (22).

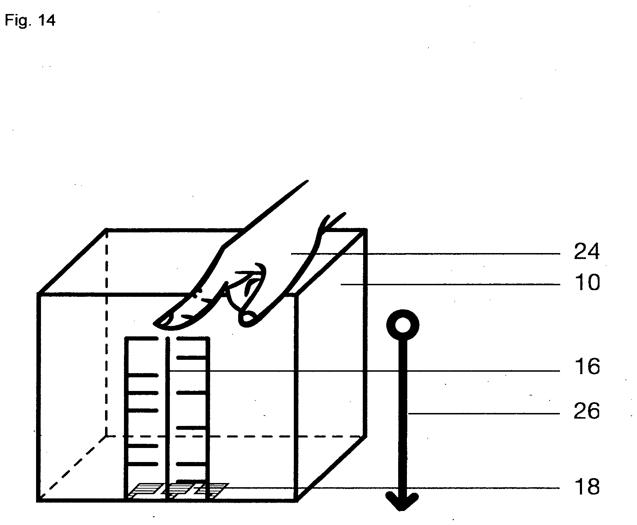

Figur 14 zeigt eine bevorzugte Ausführungsform der Vorrichtung (10), bei der der Eingabebereich (16) und der Wirkbereich (18) der elektrisch leitfähigen Struktur (12) in unterschiedlichen Ebenen der Vorrichtung (10) angeordnet vorliegen. Nur der Wirkbereich (16) der elektrisch leitfähigen Struktur (12) steht mit dem kapazitiven Flächensensor (nicht dargestellt) in Wirkkontakt (nicht dargestellt). Figur 14 zeigt eine bevorzugte Ausführungsform der Erfindung, bei der die Einzelelemente der elektrisch leitfähigen Struktur (12) strangförmig ausgebildet sind.

**Bezugszeichenliste:**

| | |
|---|---|
| 10 | Vorrichtung |
| 12 | elektrisch leitfähige Struktur |
| 14 | Einzelelement |
| 16 | Eingabebereich |
| 18 | Wirkbereich |
| 20 | galvanische Verbindung zwischen Eingabe- und Wirkbereich |
| 22 | Flächensensor |
| 24 | Eingabemittel |
| 26 | Bewegung |
| 28 | zeitabhängiges Signal |
| 30 | erster Wirkkontakt zwischen Vorrichtung und Flächensensor |
| 32 | zweiter Wirkkontakt zwischen Eingabemittel und Vorrichtung |
| 34 | Abdeckschicht |
| 36 | Unterbereiche bei strangförmigen ausgebildeten Einzelelementen |

**Patentansprüche**

1. Vorrichtung (10) zur Erzeugung eines zeitabhängigen Signals (28) auf einem kapazitiven Flächensensor (22)
   **dadurch gekennzeichnet, dass**

   a) die Vorrichtung (10) eine elektrisch leitfähige Struktur (12) umfasst, wobei die elektrisch leitfähige Struktur (12) mindestens zwei Einzelelemente (14) umfasst, die als funktionale Bereiche (16, 18) jeweils einen Eingabebereich (16) und einen Wirkbereich (18) umfassen
   b) wobei die elektrisch leitfähige Struktur (12) mit dem kapazitiven Flächensensor (22) mindestens in den Wirkbereichen (18) der elektrisch leitfähigen Struktur (12) in einem ersten Wirkkontakt (30) steht
   c) und die elektrisch leitfähige Struktur (12) mit einem Eingabemittel (24) mindestens in einem Eingabebereich (16) der elektrisch leitfähigen Struktur (12) in einem zweiten Wirkkontakt (32) steht,
   d) wobei das Eingabemittel (24) dazu eingerichtet ist, eine dynamische Eingabe auf den Eingabebereichen (16) der elektrisch leitfähigen Struktur (12) der Vorrichtung (10) auszuführen,
   e) und die elektrisch leitfähige Struktur (12) auf der Vorrichtung (10) dazu eingerichtet ist, die dynamische Eingabe zu modulieren,
   f) und die dynamische Eingabe in den Wirkbereichen (18) auf den kapazitiven Flächensensor (22) zu übertragen,
   g) und dadurch auf dem kapazitiven Flächensensor (22) ein zeitabhängiges Signal (28) zu erzeugen.

2. Vorrichtung (10) nach Anspruch 1
   **dadurch gekennzeichnet, dass**
   die Einzelelemente (14) der elektrisch leitfähigen Struktur (12) galvanisch getrennt voneinander und die funktionalen Bereiche (16, 18) eines Einzelelementes (14) galvanisch miteinander verbunden vorliegen.

3. Vorrichtung (10) nach einem oder mehreren der vorhergehenden Ansprüche
   **dadurch gekennzeichnet, dass**
   das zeitabhängige Signal (28) auf dem kapazitiven Flächensensor (22) dadurch erzeugt wird, dass die dynamische Eingabe mittels der galvanischen Verbindung (20) zwischen den funktionalen Bereichen (16, 18) eines Einzelelements (14) vom jeweiligen Eingabebereich (16) der Einzelelemente (14) in den jeweiligen Wirkbereich (18) übertragen wird, wobei die Wirkbereiche (18) der Einzelelemente (14) zumindest teilweise mit dem kapazitiven Flächensensor (22) in einem ersten Wirkkontakt (30) stehen.

4. Vorrichtung (10) nach einem oder mehreren der vorhergehenden Ansprüche
**dadurch gekennzeichnet, dass**
die Vorrichtung (10) dazu eingerichtet ist, ein zeitabhängiges Signal (28) auf dem kapazitiven Flächensensor (22) festzulegen.

5. Vorrichtung (10) nach einem oder mehreren der vorhergehenden Ansprüche
**dadurch gekennzeichnet, dass**
die Eingabebereiche (16) der Einzelelemente (14) der elektrisch leitfähigen Struktur (12) nicht in Wirkkontakt (30) mit dem Flächensensor (22) stehen.

6. Vorrichtung (10) nach einem oder mehreren der vorhergehenden Ansprüche
**dadurch gekennzeichnet, dass**
nur die Wirkbereiche (18) der Einzelelemente (14) der elektrisch leitfähigen Struktur (12) in Wirkkontakt (30) mit dem Flächensensor (22) stehen.

7. Vorrichtung (10) nach einem oder mehreren der vorhergehenden Ansprüche
**dadurch gekennzeichnet, dass**
die Einzelelemente (14) der elektrisch leitfähigen Struktur (12) im Eingabebereich (16) hinsichtlich Größe, Abstand und Form so dimensioniert sind, dass zu jedem Zeitpunkt der dynamischen Eingabe mindestens zwei Einzelelemente (14) mindestens teilweise mit dem Eingabemittel (24) in Wirkkontakt (32) stehen.

8. Vorrichtung (10) nach einem oder mehreren der vorhergehenden Ansprüche
**dadurch gekennzeichnet, dass**
ein Verlauf des zeitabhängigen Signals (28) auf dem kapazitiven Flächensensor (22) durch Anordnung, Größe, Abstand und/oder Form der Einzelelemente (14) im Eingabebereich (16) und im Wirkbereich (18) und/oder durch die Richtung und/oder Geschwindigkeit der dynamischen Eingabe bestimmbar ist.

9. Vorrichtung (10) nach einem oder mehreren der vorhergehenden Ansprüche
**dadurch gekennzeichnet, dass**
die Einzelelemente (14) im Eingabebereich (16) eine Breite von 0,5 mm bis 10 mm und einen Abstand von 0,1 mm bis 10 mm aufweisen und/oder die Einzelelemente (14) im Wirkbereich (18) eine Breite von 0,5 mm bis 20 mm und einen Abstand von 0,1 mm bis 20 mm.

10. Verwendung der Vorrichtung (10) nach einem oder mehreren der vorhergehenden Ansprüche zur Erzeugung eines zeitabhängigen Signals (28) auf einem kapazitiven Flächensensor (22) **dadurch gekennzeichnet, dass**
eine elektrisch leitfähige Struktur (12) auf der Vorrichtung (10) mit dem kapazitiven Flächensensor (22) mindestens in den Wirkbereichen (18) der elektrisch leitfähigen Struktur in einem ersten Wirkkontakt (30) steht,
wobei die Erzeugung des zeitabhängigen Signals (28) auf dem kapazitiven Flächensensor (22) durch Modulation einer dynamischen Eingabe durch die Vorrichtung (10) erfolgt, so dass das zeitabhängige Signal (28) von der Vorrichtung (10) auf den kapazitiven Flächensensor (22) übertragbar ist.

11. System umfassend eine Vorrichtung (10) nach einem oder mehreren der Ansprüche 1 bis 9 und einen Flächensensor (22)
**dadurch gekennzeichnet, dass**
die Vorrichtung (10) dazu eingerichtet ist, ein zeitabhängiges Signal (28) auf dem kapazitiven Flächensensor (22) zu erzeugen, wobei eine elektrisch leitfähige Struktur (12) der Vorrichtung (10) mit dem kapazitiven Flächensensor (22) mindestens in den Wirkbereichen (18) in einem ersten Wirkkontakt (30) steht und das zeitabhängige Signal (28) in Abhängigkeit von der Ausgestaltung der elektrisch leitfähigen Struktur (12) festgelegt wird.

12. Verfahren zur Erzeugung eines zeitabhängigen Signals (30) auf einem kapazitiven Flächensensor (22), wobei eine Vorrichtung (10) eine elektrisch leitfähige Struktur (12) umfasst, wobei die elektrisch leitfähige Struktur (12) mindestens zwei Einzelelemente (14) umfasst, die als funktionale Bereiche (16, 18) jeweils einen Eingabebereich (16) und einen Wirkbereich (18) umfassen und mit einem kapazitiven Flächensensor (22) mindestens in den Wirkbereichen (18) in einem ersten Wirkkontakt (30) steht, und wobei eine dynamische Eingabe durch Bewegung eines Eingabemittels (24) entlang der Eingabebereiche (16) der elektrisch leitfähigen Struktur (12) erfolgt, wodurch auf dem kapazitiven Flächensensor (22) ein zeitabhängiges Signal (28) erzeugt wird und wobei das zeitabhängige Signal (28) in Abhängigkeit von der Ausgestaltung der elektrisch leitfähigen Struktur (12) festgelegt wird.

**13.** Verfahren nach Anspruch 12
**dadurch gekennzeichnet, dass**
die dynamische Eingabe durch eine im Wesentlichen kontinuierliche Bewegung (26) eines Eingabemittels (24) entlang der Eingabebereiche (16) der mindestens zwei Einzelelemente (14) erfolgt.

**14.** Verfahren nach Anspruch 12 oder Anspruch 13
**dadurch gekennzeichnet, dass** das Eingabemittel (24) während der im Wesentlichen kontinuierlichen Bewegung (26) in einem zweiten Wirkkontakt (32) mit den Eingabebereichen (16) der mindestens zwei Einzelelemente (14) steht.

**Claims**

**1.** A device (10) for the generation of a time-dependent signal (28) on a capacitive surface sensor (22),
**characterized in that**

a) the device (10) comprises an electrically conductive structure (12), wherein the electrically conductive structure (12) comprises at least two individual elements (14), each of which comprises an input region (16) and an operative region (18) as functional areas (16, 18),
b) wherein the electrically conductive structure (12) is in a first operative contact (30) with the capacitive surface sensor (22) at least in the operative regions (18) of the electrically conductive structure (12),
c) and the electrically conductive structure (12) is in a second operative contact (32) with an input means (24) at least in an input region (16) of the electrically conductive structure (12),
d) wherein the input means (24) is set up to provide a dynamic input to the input regions (16) of the electrically conductive structure (12) of the device (10),
e) and the electrically conductive structure (12) on the device (10) is set up to modulate the dynamic input
f) and to transfer the dynamic input to the capacitive surface sensor (22) in the operative regions (18),
g) and thus to generate a time-dependent signal (28) on the capacitive surface sensor (22).

**2.** The device (10) according to claim 1,
**characterized in that**
the individual elements (14) of the electrically conductive structure (12) are galvanically isolated from one another and the functional regions (16, 18) of an individual element (14) are galvanically connected to one another.

**3.** The device (10) according to any one or more of the preceding claims,
**characterized in that**
the time-dependent signal (28) is generated on the capacitive surface sensor (22) **in that** the dynamic input is transferred by means of the galvanic connection (20) between the functional regions (16, 18) of an individual element (14) from the respective input regions (16) of the individual elements (14) to the respective operative regions (18), wherein the operative regions (18) of the individual elements (14) are at least partially in a first operative contact (30) with the capacitive surface sensor (22).

**4.** The device (10) according to any one or more of the preceding claims,
**characterized in that**
the device (10) is set up to determine a time-dependent signal (28) on the capacitive surface sensor (22).

**5.** The device (10) according to any one or more of the preceding claims,
**characterized in that**
the input regions (16) of the individual elements (14) of the electrically conductive structure (12) are not in operative contact (30) with the surface sensor (22).

**6.** The device (10) according to any one or more of the preceding claims,
**characterized in that**
the operative regions (18) of the individual elements (14) of the electrically conductive structure (12) are in operative contact (30) with the surface sensor (22).

**7.** The device (10) according to any one or more of the preceding claims,
**characterized in that**
the individual elements (14) of the electrically conductive structure (12) are dimensioned in the input region (16) with regards to size, spacing and shape such that at least two individual elements (14) are at least partially in operative contact (32) with the input means (24) at any time of the dynamic input.

**8.** The device (10) according to any one or more of the preceding claims,
**characterized in that**
a curve of the time-dependent signal (28) on the capacitive surface sensor (22) can be determined by arrangement, size, spacing and/or shape of the individual elements (14) in the input region (16) and in the operative range (18) and/or by the direction and/or speed of the dynamic input.

**9.** The device (10) according to any one or more of the preceding claims,
**characterized in that**
the individual elements (14) have a width of 0.5 mm to 10 mm and a spacing of 0.1 mm to 10 mm in the input region (16), and/or the individual elements (14) have a width of 0.5 mm to 20 mm and a spacing of 0.1 mm to 20 mm in the operative region (18).

**10.** A use of the device (10) according to any one or more of the preceding claims for the generation of a time-dependent signal (28) on a capacitive surface sensor (22),
**characterized in that**
an electrically conductive structure (12) on the device (10) is in a first operative contact (30) with the capacitive surface sensor (22) at least in the operative regions (18),
wherein the generation of the time-dependent signal (28) on the capacitive surface sensor (22) is executed by modulation of a dynamic input by the device (10), such that the time-dependent signal (28) can be transferred from the device (10) to the capacitive surface sensor (22).

**11.** A system comprising a device (10) according to any one or more of claims 1 to 9 and a surface sensor (22),
**characterized in that**
the device (10) is set up to generate a time-dependent signal (28) on the capacitive surface sensor (22), wherein an electrically conductive structure (12) of the device (10) is in a first operative contact (30) with the capacitive surface sensor (22) at least in the operative regions (18), and **in that** the time-dependent signal (28) is determined depending on the design of the electrically conductive structure (12).

**12.** A method for generating a time-dependent signal (30) on a capacitive surface sensor (22), wherein a device (10) comprises an electrically conductive structure (12), wherein the electrically conductive structure (12) comprises at least two individual elements (14), each of which comprises an input region (16) and an operative region (18) as functional regions (16, 18), wherein the electrically conductive structure (12) is in a first operative contact (30) with a capacitive surface sensor (22) at least in the operative regions (18), and wherein a dynamic input is provided by movement of an input means (24) along the input regions (16) of the electrically conductive structure (12), whereby a time-dependent signal (28) is generated on the capacitive surface sensor (22), and wherein the time-dependent signal (28) is determined depending on the design of the electrically conductive structure (12).

**13.** The method according to claim 12,
**characterized in that**
the dynamic input is provided by an essentially continuous movement (26) of an input means (24) along the input regions (16) of the at least two individual elements (14).

**14.** The method according to claim 12 or claim 13,
**characterized in that** the input means (24) is in a second operative contact (32) with the input regions (16) of at least two individual elements (14) during the essentially continuous movement (26).

**Revendications**

**1.** Dispositif (10) destiné à produire un signal en fonction du temps (28) sur un capteur de surface capacitif (22) **caractérisé en ce que**

a) le dispositif (10) comprend une structure électroconductrice (12), dans lequel la structure électroconductrice (12) comprend au moins deux éléments individuels (14), qui comprennent chacune une zone d'entrée (16) et une zone active (18) en tant que zones fonctionnelles (16, 18)

b) dans lequel la structure électroconductrice (12) est dans un premier contact actif (30) avec le capteur de surface capacitif (22) au moins dans les zones actives (18) de la structure électroconductrice (12)

c) et la structure électroconductrice (12) est dans un second contact actif (32) avec un moyen d'entrée (24) au moins dans une zone d'entrée (16) de la structure électroconductrice (12),

d) dans lequel le moyen d'entrée (24) est conçu pour exécuter une entrée dynamique sur les zones d'entrée (16) de la structure électroconductrice (12) du dispositif (10),

e) et la structure électroconductrice (12) sur le dispositif (10) est conçue pour moduler l'entrée dynamique,

f) et pour transférer l'entrée dynamique dans les zones actives (18) vers le capteur de surface capacitif (22),

g) et pour produire ainsi un signal en fonction du temps (28) sur le capteur de surface capacitif (22).

2. Dispositif (10) selon la revendication 1
   **caractérisé en ce que**
   les éléments individuels (14) de la structure électroconductrice (12) sont séparés galvaniquement les uns des autres et les zones fonctionnelles (16, 18) d'un élément individuel (14) sont reliées galvaniquement les unes aux autres.

3. Dispositif (10) selon l'une ou plusieurs des revendications précédentes
   **caractérisé en ce que**
   le signal en fonction du temps (28) est produit sur le capteur de surface capacitif (22) **en ce que** l'entrée dynamique est transférée au moyen de la connexion galvanique (20) entre les zones fonctionnelles (16, 18) d'un élément individuel (14) de la zone d'entrée respective (16) des éléments individuels (14) à la zone active respective (18), dans lequel les zones actives (18) des éléments individuels (14) sont au moins partiellement dans un premier contact actif (30) avec le capteur de surface capacitif (22).

4. Dispositif (10) selon l'une ou plusieurs des revendications précédentes
   **caractérisé en ce que**
   le dispositif (10) est conçu pour définir un signal en fonction du temps (28) sur le capteur de surface capacitif (22).

5. Dispositif (10) selon l'une ou plusieurs des revendications précédentes
   **caractérisé en ce que**
   les zones d'entrée (16) des éléments individuels (14) de la structure électroconductrice (12) ne sont pas en contact actif (30) avec le capteur de surface (22).

6. Dispositif (10) selon l'une ou plusieurs des revendications précédentes
   **caractérisé en ce que**
   seules les zones actives (18) des éléments individuels (14) de la structure électroconductrice (12) sont en contact actif (30) avec le capteur de surface (22).

7. Dispositif (10) selon l'une ou plusieurs des revendications précédentes
   **caractérisé en ce que**
   les éléments individuels (14) de la structure électroconductrice (12) dans la zone d'entrée (16) sont dimensionnés en termes de taille, d'espacement et de forme de sorte qu'à tout moment de l'entrée dynamique, au moins deux éléments individuels (14) sont au moins partiellement en contact actif (32) avec le moyen d'entrée (24).

8. Dispositif (10) selon l'une ou plusieurs des revendications précédentes
   **caractérisé en ce que**
   une courbe du signal en fonction du temps (28) sur le capteur de surface capacitif (22) peut être déterminée par la disposition, la taille, l'espacement et/ou la forme des éléments individuels (14) dans la zone d'entrée (16) et dans la zone active (18) et/ou par la direction et/ou la vitesse de l'entrée dynamique.

9. Dispositif (10) selon l'une ou plusieurs des revendications précédentes
   **caractérisé en ce que**
   les éléments individuels (14) dans la zone d'entrée (16) présentent une largeur de 0,5 mm à 10 mm et un espacement de 0,1 mm à 10 mm et/ou les éléments individuels (14) dans la zone active (18) présentent une largeur de 0,5 mm à 20 mm et un espacement de 0,1 mm à 20 mm.

**10.** Utilisation du dispositif (10) selon l'une ou plusieurs des revendications précédentes pour produire un signal en fonction du temps (28) sur un capteur de surface capacitif (22),
**caractérisée en ce que**
une structure électroconductrice (12) sur le dispositif (10) est dans un premier contact actif (30) avec le capteur de surface capacitif (22) au moins dans les zones actives (18) de la structure électroconductrice,
dans laquelle la production du signal en fonction du temps (28) sur le capteur de surface capacitif (22) a lieu par modulation d'une entrée dynamique par le dispositif (10), de sorte que le signal en fonction du temps (28) peut être transféré du dispositif (10) au capteur de surface capacitif (22).

**11.** Système comprenant un dispositif (10) selon l'une ou plusieurs des revendications 1 à 9 et un capteur de surface (22)
**caractérisé en ce que**
le dispositif (10) est conçu pour produire un signal en fonction du temps (28) sur le capteur de surface capacitif (22), dans lequel une structure électroconductrice (12) du dispositif (10) est dans un premier contact actif (30) avec le capteur de surface capacitif (22) au moins dans les zones actives (18) et le signal en fonction du temps (28) est défini en fonction de la conception de la structure électroconductrice (12).

**12.** Procédé destiné à produire un signal en fonction du temps (30) sur un capteur de surface capacitif (22), dans lequel un dispositif (10) comprend une structure électroconductrice (12), dans lequel la structure électroconductrice (12) comprend au moins deux éléments individuels (14) qui comprennent chacun une zone d'entrée (16) et une zone active (18) comme zones fonctionnelles (16, 18), et est dans un premier contact actif (30) avec un capteur de surface capacitif (22) au moins dans les zones actives (18), et dans lequel une entrée dynamique a lieu par le déplacement d'un moyen d'entrée (24) le long des zones d'entrée (16) de la structure électroconductrice (12), ce qui permet de produire un signal en fonction du temps (28) sur le capteur de surface capacitif (22) et dans lequel le signal en fonction du temps (28) est défini en fonction de la conception de la structure électroconductrice (12).

**13.** Procédé selon la revendication 12,
**caractérisé en ce que**
l'entrée dynamique a lieu par un déplacement sensiblement continu (26) d'un moyen d'entrée (24) le long des zones d'entrée (16) des au moins deux éléments individuels (14).

**14.** Procédé selon la revendication 12 ou la revendication 13, **caractérisé en ce que** le moyen d'entrée (24) est dans un second contact actif (32) avec les zones d'entrée (16) des au moins deux éléments individuels (14) pendant le déplacement sensiblement continu (26).

Fig. 1

— 26
— 24
— 10
— 32
— 14
— 30
— 12
— 22

— 28
— 22

Fig. 2

Fig. 3

Fig. 4

26

24

10

14

12

28

Fig. 5

26

24

10

16

14

18

12

22

Fig. 6

Fig..7

32

26

24

12

14

10

Fig. 8

32

26
24
12
34
14
10

Fig. 9

Fig. 10

Fig. 11

Fig. 12

26
10
24
32
12
16
22
18
30

Fig. 13

10

12

36

24

32

26

10

22

30

Fig. 14

24

10

16

26

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011154524 A1
- DE 102012023082 A1
- DE 102013101881 A1
- US 20100045627 A1
- EP 2458526 A1
- EP 0422482 A2